# EUROPÄISCHE PATENTSCHRIFT

(11) **EP 3 960 613 B1**
(45) Veröffentlichungstag und Bekanntmachung des Hinweises auf die Patenterteilung: **07.12.2022**
(21) Anmeldenummer: 21187581.0
(22) Anmeldetag: 26.07.2021
(51) Int. Cl.: B62M 11/18, B62M 6/55, B62M 11/14, F16H 3/66

(54) **MEHRSTUFENGETRIEBE IN PLANETENBAUWEISE FÜR EIN FAHRRAD ODER EIN PEDELEC**
MULTI-STAGE PLANETARY TRANSMISSION FOR A BICYCLE OR A PEDELEC
ENGRENAGE À PLUSIEURS ÉTAGES DE CONCEPTION PLANÉTAIRE POUR UNE BICYCLETTE OU UNE BICYCLETTE ÉLECTRIQUE

(30) Priorität: 31.08.2020 DE 102020210928
(43) Veröffentlichungstag der Anmeldung: 02.03.2022
(73) Patentinhaber: ZF Friedrichshafen AG, 88046 Friedrichshafen (DE)
(72) Erfinder: Ziemer, Peter, 88069 Tettnang (DE)
(74) Vertreter: ZF Friedrichshafen AG

(56) Entgegenhaltungen:
- WO-A1-2014/072344
- WO-A1-2019/228724
- WO-A1-2019/228726

## Beschreibung

Die vorliegende Erfindung betrifft ein Mehrstufengetriebe in Planetenbauweise für ein Fahrrad oder ein Pedelec. Ferner betrifft die Erfindung ein Fahrrad oder Pedelec mit dem Mehrstufengetriebe.

Dokument WO2019/228724A1 zeigt die Präambel des Anspruchs 1.

Beispielsweise aus der Druckschrift DE 10 2018 208 380 ist ein Mehrstufengetriebe in Planetenbauweise für ein Fahrrad oder Pedelec bekannt. Das Mehrstufengetriebe umfasst zwei Hauptradsätze und einen Vorschaltradsatz und einen Nachschaltradsatz. Ferner sind vier Freilaufkupplungen und vier Bremsen vorgesehen, um 16 Gangstufen zu realisieren. Das Mehrstufengetriebe liefert bei üblichen Standgetriebeübersetzungen der einzelnen Radsätze zwischen - 2,4 und -1,6 eine für Mountainbikes günstige große Getriebespreizung von ca. 6 bei konstanter Stufung.

Eine konstante oder quasi konstante Gangstufung bzw. eine Gangstufung mit zu höheren Gängen hin größer werdenden Gangsprüngen ist bei steigender Geschwindigkeit aufgrund des quadratisch ansteigenden Luftwiderstandes nachteilig. Dies gilt insbesondere bei einer Zeitfahrmaschine, die z. B. bei Einzelzeitfahrten oder im Triathlon eingesetzt wird, bei denen die Möglichkeit der Nutzung eines vorhandenen Windschattens nicht möglich ist. Ferner werden Zeitfahrmaschinen üblicherweise bei höheren Geschwindigkeiten und damit bei hohem Luftwiderstand betrieben. Hierbei ergibt sich der Nachteil, dass in oberen Geschwindigkeitsbereichen kleinere Geschwindigkeitsänderungen bereits große Auswirkungen auf den Krafteinsatz bei dem Fahrer haben. Des Weiteren möchte der Fahrer in dem genannten Geschwindigkeitsbereich mit möglichst konstanter Trittfrequenz fahren, welches dazu führt, dass im Getriebe die Gangsprünge hin zu höheren Gängen kleiner werden sollten.

Der vorliegenden Erfindung liegt die Aufgabe zugrunde, ein effizientes Mehrstufengetriebe und ein Fahrrad oder Pedelec mit dem Mehrstufengetriebe vorzuschlagen, welche eine insbesondere Zeitfahrmaschinen orientierte mit zu größeren Gängen hin fallende Gangstufung konstruktiv einfach realisieren.

Diese Aufgabe wird durch die Merkmale des Patentanspruches 1 bzw. 19 gelöst, wobei vorteilhafte und beanspruchte Weiterbildungen den Ansprüchen und der Beschreibung sowie den Zeichnungen zu entnehmen sind.

Somit wird ein Mehrstufengetriebe in Planetenbauweise für ein Fahrrad oder ein Pedelec, mit einer Getriebeeingangswelle als Antrieb und einer Getriebeausgangswelle als Abtrieb vorgeschlagen. Das Mehrstufengetriebe weist einen ersten Planetenradsatz, einen zweiten Planetenradsatz, einen dritten Planetenradsatz und einen vierten Planetenradsatz auf, wobei zumindest vier Freilaufkupplungen und zumindest vier Bremsen zum Realisieren von zumindest 16 Gängen vorgesehen sind, wobei ein Eingangselement des ersten Planetenradsatzes mit der Getriebeeingangswelle verbunden ist, wobei ein Ausgangselement des ersten Planetenradsatzes mit der Getriebeausgangswelle verbunden ist, wobei ein Koppelelement des ersten Planetenradsatzes mit einem zweiten Element des zweiten Planetenradsatzes verbunden ist, wobei ein erstes Element des zweiten Planetenradsatzes mit einem zweiten Element des dritten Planetenradsatzes verbunden ist, wobei ein drittes Element des zweiten Planetenradsatzes mit einem zweiten Element des vierten Planetenradsatzes verbunden ist, wobei ein erstes Element des dritten Planetenradsatzes mit einer ersten Bremse festsetzbar ist, wobei das erste Element des dritten Planetenradsatzes über eine erste Freilaufkupplung mit dem Eingangselement des ersten Planetenradsatzes verbindbar ist, wobei ein drittes Element des dritten Planetenradsatzes über eine zweite Bremse festsetzbar ist, wobei das dritte Element des dritten Planetenradsatzes über eine zweite Freilaufkupplung mit dem Eingangselement des ersten Planetenradsatzes verbindbar ist, wobei ein erstes Element des vierten Planetenradsatzes über eine dritte Bremse festsetzbar ist, wobei das erste Element des vierten Planetenradsatzes über eine dritte Freilaufkupplung mit dem Eingangselement des ersten Planetenradsatzes verbindbar ist, wobei ein drittes Element des vierten Planetenradsatzes über eine vierte Bremse festsetzbar ist und wobei das dritte Element des vierten Planetenradsatzes über eine vierte Freilaufkupplung mit dem Eingangselement des ersten Planetenradsatzes verbindbar ist.

Durch die vorgeschlagene Verschaltung der vier Planetenradsätze bei dem Mehrstufengetriebe werden über das zweite Element des zweiten Planetenradsatzes an dem ersten Planetenradsatz 16 Übersetzungen bzw. Drehzahlen realisiert. Dies dadurch, dass durch die Verbindung über das erste Element des zweiten Planetenradsatzes mit dem dritten Planetenradsatz vier unterschiedliche Geschwindigkeiten bzw. Übersetzungen bereitgestellt werden und dass durch die Verbindung über das dritte Element des zweiten Planetenradsatzes mit dem vierten Planetenradsatz weitere vier unterschiedliche Geschwindigkeiten bzw. Übersetzungen bereitgestellt werden, deren Produkt die 16 Übersetzungen bzw. Drehzahlen an dem ersten Planetenradsatz erzeugen. Die auf diese Weise miteinander verbundenen bzw. verschalteten Einzelradsätze des vorgeschlagenen Mehrstufengetriebes sind nicht nur konstruktiv einfach aufgebaut und benötigen einen möglichst geringen Bauraum, sondern realisieren ein effizientes Mehrstufengetriebe, das den bei steigender Geschwindigkeit quadratisch anwachsenden Luftwiderstand dadurch berücksichtigt, dass es eine zu größeren Gängen hin fallende Gangstufung mit vorzugsweise kleiner Getriebespreizung von beispielsweise 1,8 bis 2,25 aufweist. Auf diese Weise ist das vorgeschlagene Mehrstufengetriebe an einen bevorzugten Einsatz bei einer Zeitfahrmaschine, insbesondere hinsichtlich der vorgesehenen Gangstufung optimal angepasst. Ferner liegt der gangabhängige Verzahnungswirkungsgrad im Mittel oberhalb von 99 Prozent. Darüber hinaus ergibt sich eine bessere Aerodynamik gegenüber bekannter Kettenschaltungen.

Im Rahmen einer möglichen Ausführung der Erfindung kann vorgesehen sein, dass das Eingangselement des ersten Planetenradsatzes als zweites Element des ersten Planetenradsatzes ausgeführt ist, wobei das Ausgangselement des ersten Planetenradsatzes entweder als erstes Element oder als drittes Element des ersten Planetenradsatzes und das Koppelelement des ersten Planetenradsatzes zum Verbinden mit dem zweiten Planetenradsatz entweder als drittes Element oder als erstes Element ausgeführt sind. Demzufolge kann eine Vertauschung zwischen Ausgangselement und Koppelelement bei dem vorgeschlagenen Mehrstufengetriebe vorgenommen werden. Bei der Vertauschung der Anbindung des ersten und dritten Elements am ersten Planetenradsatz ergibt sich eine größere Gesamtspreizung. Dies bedeutet, es können mit dieser einfachen Vertauschung zwei Getriebevarianten mit unterschiedlichen Gesamtspreizungen erzeugt werden. Eine Vergrößerung der Gesamtspreizung kann mit einer zusätzlichen Verkleinerung der Standübersetzung bei dem ersten Planetenradsatz erreicht werden.

Vorzugsweise kann bei der vorliegenden Erfindung zumindest einer der vorgesehenen Einzelradsätze als Minus-Planetenradsatz ausgeführt sein, wodurch sich eine besonders bauraumgünstige Anordnung ergibt. Es ist auch denkbar, dass ein oder mehrere der Einzelradsätze als Plus-Planetenradsätze ausgeführt sind.

Ein Minus-Planetenradsatz kann bevorzugt in einen Plus-Planetenradsatz überführt werden, wenn die Planetenradträger- und die Hohlradanbindung an diesem Radsatz miteinander vertauscht werden und der Betrag der Standübersetzung um 1 erhöht wird. Ein Minus-Planetenradsatz weist an seinem Planetenradträger verdrehbar gelagerte Planetenräder auf, die mit dem Sonnenrad und dem Hohlrad dieses Planetenradsatzes kämmen, sodass sich das Hohlrad bei festgehaltenem Planetenradträger und drehendem Sonnenrad in zur Sonnenraddrehrichtung entgegengesetzter Richtung dreht.

Ein Plus-Planetenradsatz weist an seinem Planetenradträger verdrehbar gelagerte und miteinander in Zahneingriff stehende innere und äußere Planetenräder auf, wobei das Sonnenrad dieses Planetenradsatzes mit den inneren Planetenrädern und das Hohlrad dieses Planetenradsatzes mit den äußeren Planetenrädern kämmen, sodass sich das Hohlrad bei festgehaltenem Planetenradträger und drehendem Sonnenrad in zur Sonnenraddrehrichtung gleicher Drehrichtung dreht.

Für den Fachmann bedeutet dies, dass bei den als Minus-Planetenradsatz ausgeführten Einzelradsätzen ein erstes Element als Hohlrad, ein zweites Element als Planetenradträger und ein drittes Element als Sonnenrad ausgeführt sind. Ferner bedeutet dies, dass bei einem als Plus-Planetenradsatz ausgeführten Einzelradsatz das erste Element als Planetenradträger, das zweite Element als Hohlrad und das dritte Element als Sonnenrad ausgeführt sind.

Eine nächste Weiterbildung der Erfindung kann vorsehen, dass bei dem vorgeschlagenen Mehrstufengetriebe zumindest einer der Planetenradsätze mit einem Stufenplaneten ausgeführt ist. Durch die Verwendung eines Stufenplaneten wird eine radiale Bauraumverringerung realisiert. Vorzugsweise kann bei dem ersten Planetenradsatz und dem zweiten Planetenradsatz jeweils ein Stufenplanet vorgesehen sein. Beispielsweise kann bei Vertauschung der Anbindungen an den Stufen des Stufenplaneten z. B. des ersten Planetenradsatzes die Standübersetzung verkleinert werden, z. B. auf - 3,1, sodass ohne größeren Umbau ein Mehrstufengetriebe mit einer Gesamtspreizung von 4,1 geschaffen werden kann.

Im Rahmen der Erfindung ist vorgesehen, dass bei einem als Minus-Planetenradsatz ausgeführten dritten und/oder vierten Planetenradsatz zur bauraumgünstigen Herstellung der Bindbarkeit mit den anderen Planetenradsätzen ein geteiltes Sonnenrad oder ein geteiltes Hohlrad vorgesehen sind. Das geteilte Sonnenrad weist dabei ein erstes Sonnenradteil und ein zweites Sonnenradteil auf, welche miteinander wirkverbunden sind, wobei das geteilte Hohlrad ein erstes Hohlradteil und ein zweites Hohlradteil aufweist, welche ebenfalls miteinander wirkverbunden sind. Bei der Verwendung eines geteilten Sonnenrades anstelle eines geteilten Hohlrades ergibt sich der Vorteil eines geringeren Bauaufwandes. Alternativ dazu wäre es denkbar, den dritten Planetenradsatz und/oder den vierten Planetenradsatz jeweils als Plus-Planetenradsatz mit z. B. einer Standübersetzung von etwa 3 zu verwenden, um aufgrund der Vertauschung von Hohlrad und Planetenradträger eine Bindung mit den anderen Planetenradsätzen zu vereinfachen bzw. zu ermöglichen.

Um neben dem manuellen Antrieb über die Getriebeeingangswelle bzw. Tretlagerkurbelwelle durch den Fahrer auch eine elektrische Unterstützungsleistung zu ermöglichen, kann bei dem erfindungsgemäßen Mehrstufengetriebe vorgesehen sein, dass zumindest eine elektrische Maschine oder dergleichen eingesetzt wird. Die elektrische Maschine kann beispielsweise an der Getriebeeingangswelle, der Getriebeausgangswelle und/oder an anderen Wellen des Getriebes direkt oder auch über eine oder mehrere Getriebestufen, Ketten, Zahnriemen oder dergleichen angebunden werden. Hierfür kann auch ggf. ein Schaltelement, wie z. B. eine Freilaufkupplung oder dergleichen eingesetzt werden. Dadurch ergibt sich der Vorteil, dass während des Pedalierens bei abgeschaltetem e-Maschinenantrieb kein Schleppmoment durch eine durch das Pedalieren angetriebene elektrische Maschine auftreten. Bei einer Anbindung über eine Getriebestufe kann ggf. eine Übersetzung z. B. ins Langsame realisiert werden.

Bei der Ausführung des Mehrstufengetriebes z. B. als elektrisch unterstützter Tretlagerantrieb kann vorzugsweise eine Freilaufkupplung zwischen der Tretlagerkurbelwelle und dem Getriebeeingang realisiert werden. Hierdurch ergibt sich der Vorteil, dass eine angebundene elektrische Maschine weiterdrehen kann, ohne dass sich die Pedale der Tretlagerkurbelwelle drehen.

Ein weiterer Aspekt der vorliegenden Erfindung liegt darin, ein Fahrrad oder ein Pedelec oder dergleichen mit dem vorbeschriebenen Mehrstufengetriebe zu beanspruchen, wobei sich die beschriebenen und weitere Vorteile ergeben.

Nachfolgend wird die vorliegende Erfindung anhand der Zeichnungen weiter erläutert. Es zeigen:
Figur 1 eine schematische Ansicht einer ersten Ausführungsvariante eines erfindungsgemäßen Mehrstufengetriebes mit vier Planetenradsätzen zum Realisieren von sechzehn Gängen;
Figur 2 eine schematische Ansicht einer zweiten Ausführungsvariante des Mehrstufengetriebes mit vier Planetenradsätzen zum Realisieren von sechzehn Gängen;
Figur 3 eine schematische Ansicht einer dritten Ausführungsvariante des Mehrstufengetriebes mit vier Planetenradsätzen zum Realisieren von sechzehn Gängen;
Figur 4 eine schematische Ansicht einer vierten Ausführungsvariante des Mehrstufengetriebes mit vier Planetenradsätzen zum Realisieren von sechzehn Gängen; und
Figur 5 ein Schaltschema für die Ausführungsvarianten des Mehrstufengetriebes.

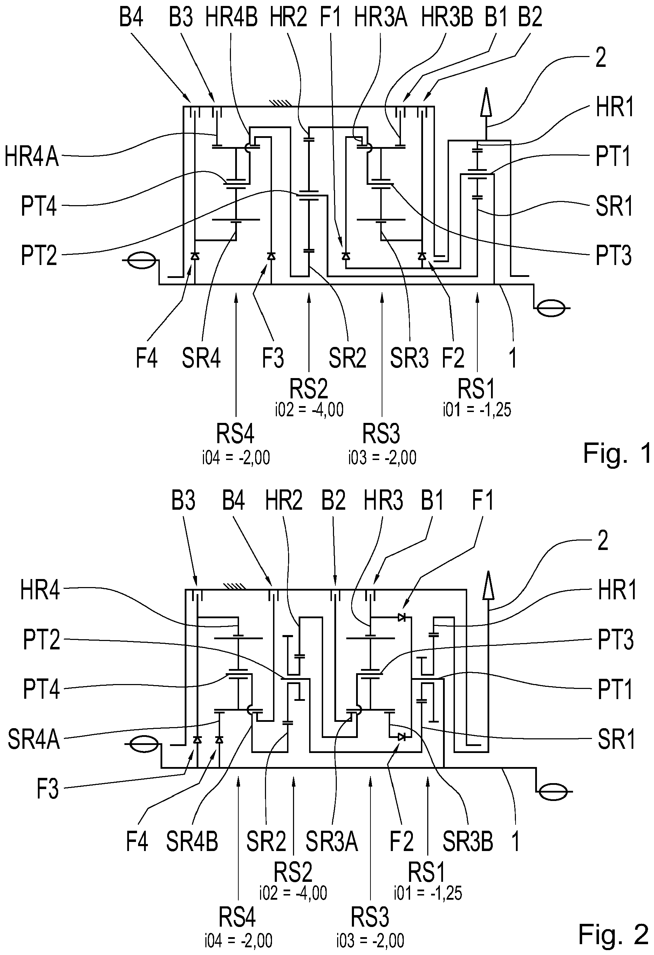

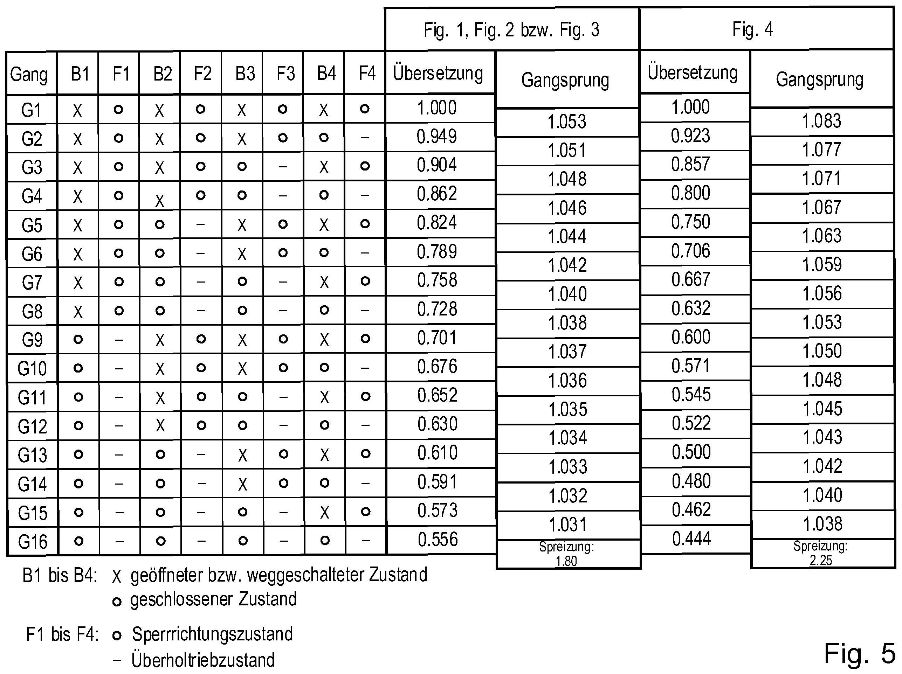

In den Figuren 1 bis 4 sind verschiedene Ausführungsvarianten eines erfindungsgemäßen Mehrstufengetriebes beispielsweise als Tretlagerantrieb in Koaxialbauweise eines Fahrrades oder Pedelecs dargestellt, wobei in Figur 5 ein Schaltschema für die Ausführungsvarianten gemäß Figuren 1 bis 4 mit den dazugehörigen Übersetzungen und den Gangsprüngen sowie der jeweiligen Getriebespreizung angegeben sind.

In dem Schaltschema gemäß Figur 5 sind die einzelnen Zustände der als Bremsen B1, B2, B3, B4 und der Freilaufkupplungen F1, F2, F3, F4 ausgeführten Schaltelementen angedeutet, wobei bei den Bremsen B1, B2, B3, B4 ein Kreis den geschlossenen Zustand und ein Kreuz den geöffneten bzw. weggeschalteten Zustand anzeigt, während bei den Freilaufkupplungen F1, F2, F3, F4 ein Kreis den Sperrrichtungszustand und ein Strich den Überholtriebzustand angibt. Der Überholbetrieb bzw. der Überholtriebzustand einer Freilaufkupplung F1, F2, F3, F4 bedeutet, dass der Freilauf nicht sperrt und somit kein Moment überträgt. Eine Freilaufkupplung F1, F2, F3, F4 kann sich in seinem Überholtrieb befinden, wenn sich eines der mit dem Freilauf verbundenen Elemente so schnell dreht, dass der Freilauf nicht sperren kann. Der Sperrrichtungszustand bei einer Freilaufkupplung F1, F2, F3, F4 bedeutet, dass der Freilauf sperrt und somit ein Moment überträgt.

Unabhängig von der jeweiligen Ausführungsvariante des Mehrstufengetriebes ist vorgesehen, dass das Mehrstufengetriebe in Planetenbauweise für ein Fahrrad, ein Pedelec oder dergleichen einsetzbar ist. Das Mehrstufengetriebe umfasst eine Getriebeeingangswelle 1 als Antrieb, welche in den Figuren 1 bis 4 beispielsweise als Tretlagerkurbelwelle ausgeführt ist, und eine Getriebeausgangwelle 2 als Abtrieb, welche z. B. als Kettenblatt bzw. Ketten- oder Zahnriemenrad ausgeführt sein kann.

Das vorgeschlagene Mehrstufengetriebe bzw. Tretlagergetriebe umfasst einen ersten Planetenradsatz RS1, einen zweiten Planetenradsatz RS2, einen dritten Planetenradsatz RS3 und einen vierten Planetenradsatz RS4. Darüber hinaus sind vier Freilaufkupplungen F1, F2, F3, F4 und vier Bremsen bzw. Freilaufbremsen B1, B2, B3, B4 als Schaltelemente zum Realisieren von 16 Gängen G1, G2, G3, G4, G5, G6, G7, G8, G9, G10, G11, G12, G13, G14, G15, G16 vorgesehen.

Unabhängig davon, ob bei dem vorgeschlagenen Mehrstufengetriebe Minus- oder Plus-Planetenradsätze vorgesehen sind, ist vorgesehen, dass ein Eingangselement des ersten Planetenradsatzes RS1 mit der Getriebeeingangswelle 1 verbunden ist, wobei ein Ausgangselement des ersten Planetenradsatzes RS1 mit der Getriebeausgangswelle 2 verbunden ist. Ein Koppelelement des ersten Planetenradsatzes RS1 ist mit einem zweiten Element des zweiten Planetenradsatzes RS2 verbunden, wobei ein erstes Element des zweiten Planetenradsatzes RS2 mit einem zweiten Element des dritten Planetenradsatzes RS3 verbunden ist.

Ein drittes Element des zweiten Planetenradsatzes RS2 ist mit einem zweiten Element des vierten Planetenradsatzes RS4 verbunden, wobei ein erstes Element des dritten Planetenradsatzes RS3 mit einer ersten Bremse B1 festsetzbar ist und wobei das erste Element des dritten Planetenradsatzes RS3 über eine erste Freilaufkupplung F1 mit dem Eingangselement des ersten Planetenradsatzes RS1 verbindbar ist. Ein drittes Element des dritten Planetenradsatzes RS3 ist über eine zweite Bremse B2 festsetzbar, wobei das dritte Element des dritten Planetenradsatzes RS3 über eine zweite Freilaufkupplung F2 mit dem Eingangselement des ersten Planetenradsatzes RS1 verbindbar ist und wobei ein erstes Element des vierten Planetenradsatzes RS4 über eine dritte Bremse B3 festsetzbar ist. Das erste Element des vierten Planetenradsatzes RS4 ist über eine dritte Freilaufkupplung F3 mit dem Eingangselement des ersten Planetenradsatzes RS1 verbindbar, wobei ein drittes Element des vierten Planetenradsatzes RS4 über eine vierte Bremse B4 festsetzbar ist und wobei das dritte Element des vierten Planetenradsatzes RS4 über eine vierte Freilaufkupplung F4 mit dem Eingangselement des ersten Planetenradsatzes RS1 verbindbar ist.

Hierbei gilt, dass bei einem Minus-Planetenradsatz das erste Element als Hohlrad HR1, HR2, HR3, HR3A, HR3B, HR4, HR4A, HR4B, das zweite Element als Planetenradträger PT1, PT2, PT3, PT4 und das dritte Element als Sonnenrad SR1, SR2, SR3, SR3A, SR3B, SR4, SR4A, SR4B ausgeführt sind dass bei einem Plus-Planetenradsatz das erste Element als Planetenradträger PT1, PT2, PT3, PT4, das zweite Element als Hohlrad HR1, HR2, HR3, HR3A, HR3B, HR4, HR4A, HR4B und das dritte Element als Sonnenrad SR1, SR2, SR3, SR3A, SR3B, SR4, SR4A, SR4B ausgeführt sind.

Unabhängig von der jeweiligen Ausführungsvariante weist der erste Planetenradsatz RS1 bevorzugt eine Standübersetzung i01 von etwa - 1,25, der zweite Planetenradsatz RS2 eine Standübersetzung i02 von etwa - 4,00, der dritte Planetenradsatz RS3 eine Standübersetzung i03 von etwa - 2,00 und der vierte Planetenradsatz RS4 eine Standübersetzung i04 von etwa -2,00 auf. Die verschiedenen Radsatzanordnungen des Mehrstufengetriebes gemäß der Erfindung ermöglichen somit eine kleine Gesamtspreizung von etwa 1,80 oder 2,25 und zu den höheren Gängen kleiner werdenden Gangsprünge, sodass ein Einsatz vorzugsweise für Zeitfahrmaschinen für Einzelzeitfahrten besonders vorteilhaft ist.

Eine erste Ausführungsvariante des Mehrstufengetriebes als 16-Gang-Variante ist in Figur 1 dargestellt, bei der in axialer Reihenfolge der vierte Planetenradsatz RS4, der zweite Planetenradsatz RS2, der dritte Planetenradsatz RS3 und der erste Planetenradsatz RS1 jeweils als Minus-Planetenradsatz vorgesehen sind. Bei der vorbeschriebenen axialen Reihenfolge der Einzelradsätze RS4-RS2-RS3-RS1 wird der erste Planetenradsatz RS1 nach außen radial innerhalb eines zum Beispiel als Getriebeausgangswelle 2 ausgeführten Kettenblatts verlagert, wodurch sich eine Reduzierung der Baulänge innerhalb des Tretlagergehäuses ergibt.

Im Detail ist bei der ersten Ausführungsvariante vorgesehen, dass die Getriebeeingangswelle 1 mit einem Planetenradträger PT1 des ersten Planetenradsatzes RS1 als Eingangselement verbunden ist, wobei ein Hohlrad HR1 des ersten Planetenradsatzes RS1 als Ausgangselement mit der Getriebeausgangswelle 2 verbunden ist und wobei ein Sonnenrad SR1 des ersten Planetenradsatzes RS1 als Koppelelement mit einem Planetenradträger PT2 des zweiten Planetenradsatzes RS2 verbunden ist. Ein Hohlrad HR2 des zweiten Planetenradsatzes RS2 ist mit einem Planetenradträger PT3 des dritten Planetenradsatzes RS3 verbunden, wobei ein Sonnenrad SR2 des zweiten Planetenradsatzes RS2 mit einem Planetenradträger PT4 des vierten Planetenradsatzes RS4 verbunden ist und wobei ein Sonnenrad SR3 des dritten Planetenradsatzes RS3 über eine zweite Bremse B2 festsetzbar ist. Zudem ist das Sonnenrad SR3 des dritten Planetenradsatzes RS3 über eine zweite Freilaufkupplung F2 mit dem Planetenradträger PT1 des ersten Planetenradsatzes RS1 verbindbar. Ein geteiltes Hohlrad HR3A, HR3B ist bei dem dritten Planetenradsatz RS3 vorgesehen, wobei ein erstes Hohlradteil HR3A über eine erste Freilaufkupplung F1 mit dem Planetenradträger PT1 des ersten Planetenradsatzes RS1 verbindbar ist und wobei ein zweites Hohlradteil HR3B über eine erste Bremse B1 festsetzbar ist. Ein Sonnenrad SR4 des vierten Planetenradsatzes RS4 ist über eine vierte Bremse B4 festsetzbar, wobei das Sonnenrad SR4 des vierten Planetenradsatzes RS4 über eine vierte Freilaufkupplung F4 mit dem Planetenradträger PT1 des ersten Planetenradsatzes RS1 verbindbar ist. Ferner ist ein geteiltes Hohlrad HR4A, HR4B bei dem vierten Planetenradsatz RS4 vorgesehen, wobei ein erstes Hohlradteil HR4A über eine dritte Bremse B3 festsetzbar ist und wobei ein zweites Hohlradteil HR4B über eine dritte Freilaufkupplung F3 mit dem Planetenradträger PT1 des ersten Planetenradsatzes RS1 verbindbar ist.

Die erste Ausführungsvariante gemäß Figur 1 realisiert ohne Verwendung eines Stufenplaneten ein 16-Gang-Tretlagergetriebe mit sehr kleiner Gesamtspreizung und abnehmenden Gangsprüngen, wie aus dem Schaltschema gemäß Figur 5 zu entnehmen ist. Ferner sind bei der ersten Ausführungsvariante geteilte Hohlräder HR3A, HR3B, HR4A, HR4B bei dem dritten Planetenradsatz RS3 und dem vierten Planetenradsatz RS4 vorgesehen.

Eine zweite Ausführungsvariante des Mehrstufengetriebes als 16-Gang-Variante ist in Figur 2 dargestellt, wobei die gleiche axiale Reihenfolge wie bei der ersten Ausführungsvariante vorgesehen ist.

Im Detail ist bei der zweiten Ausführungsvariante vorgesehen, dass der erste Planetenradsatz RS1 mit einem Stufenplaneten ausgeführt ist, wobei die Getriebeeingangswelle 1 mit dem Planetenradträger PT1 des ersten Planetenradsatzes RS1 als Eingangselement verbunden ist und wobei das mit dem Stufenplaneten in Eingriff stehende Hohlrad HR1 des ersten Planetenradsatzes RS1 als Ausgangselement mit der Getriebeausgangswelle 2 verbunden ist. Das mit dem Stufenplaneten in Eingriff stehende Sonnenrad SR1 des ersten Planetenradsatzes RS1 als Koppelelement ist mit dem Planetenradträger PT2 des zweiten Planetenradsatzes RS2 verbunden. Der zweite Planetenradsatz RS2 ist mit einem Stufenplaneten ausgeführt, wobei das mit dem Stufenplaneten in Eingriff stehende Sonnenrad SR2 des zweiten Planetenradsatzes RS2 mit dem Planetenradträger PT4 des vierten Planetenradsatzes RS4 verbunden ist und wobei das mit dem Stufenplaneten in Eingriff stehende Hohlrad HR2 des zweiten Planetenradsatzes RS2 mit dem Planetenradträger PT3 des dritten Planetenradsatzes RS3 verbunden ist. Das Hohlrad HR3 des dritten Planetenradsatzes RS3 ist über die erste Bremse B1 festsetzbar, wobei das Hohlrad HR3 des dritten Planetenradsatzes RS3 über die erste Freilaufkupplung F1 mit dem Planetenradträger PT1 des ersten Planetenradsatzes RS1 verbindbar ist. Ferner ist ein geteiltes Sonnenrad SR3A, SR3B bei dem dritten Planetenradsatz RS3 vorgesehen, wobei ein erstes Sonnenradteil SR3A über die zweite Bremse B2 festsetzbar ist und wobei ein zweites Sonnenradteil SR3B über die zweite Freilaufkupplung F2 mit dem Planetenradträger PT1 des ersten Planetenradsatzes RS1 verbindbar ist. Das Hohlrad HR4 des vierten Planetenradsatzes RS4 ist über die dritte Bremse B3 festsetzbar, wobei das Hohlrad HR4 des vierten Planetenradsatzes RS4 über die dritte Freilaufkupplung F3 mit dem Planetenradträger PT1 des ersten Planetenradsatzes RS1 verbindbar ist. Ferner ist ein geteiltes Sonnenrad SR4A, SR4B bei dem vierten Planetenradsatz RS4 vorgesehen, wobei ein erstes Sonnenradteil SR4A über eine vierte Freilaufkupplung F4 mit dem Planetenradträger PT1 des ersten Planetenradsatzes RS1 verbindbar ist und wobei ein zweites Sonnenradteil SR4B über die vierte Bremse B4 festsetzbar ist.

Im Unterschied zur ersten Ausführungsvariante ist bei der zweiten Ausführungsvariante gemäß Figur 2 vorgesehen, dass sowohl der erste Planetenradsatz RS1 als auch der zweite Planetenradsatz RS2 jeweils mit einem Stufenplaneten ausgeführt sind, wodurch sich eine Verringerung des radialen Bauraumes ergibt. Ferner ist anstelle eines geteilten Hohlrades HR3A, HR3B, HR4A, HR4B ein geteiltes Sonnenrad SR3A, SR3B, SR4A, SR4B bei dem dritten Planetenradsatz RS3 als auch bei dem vierten Planetenradsatz RS4 vorgesehen, wodurch sich der Bauaufwand verringert.

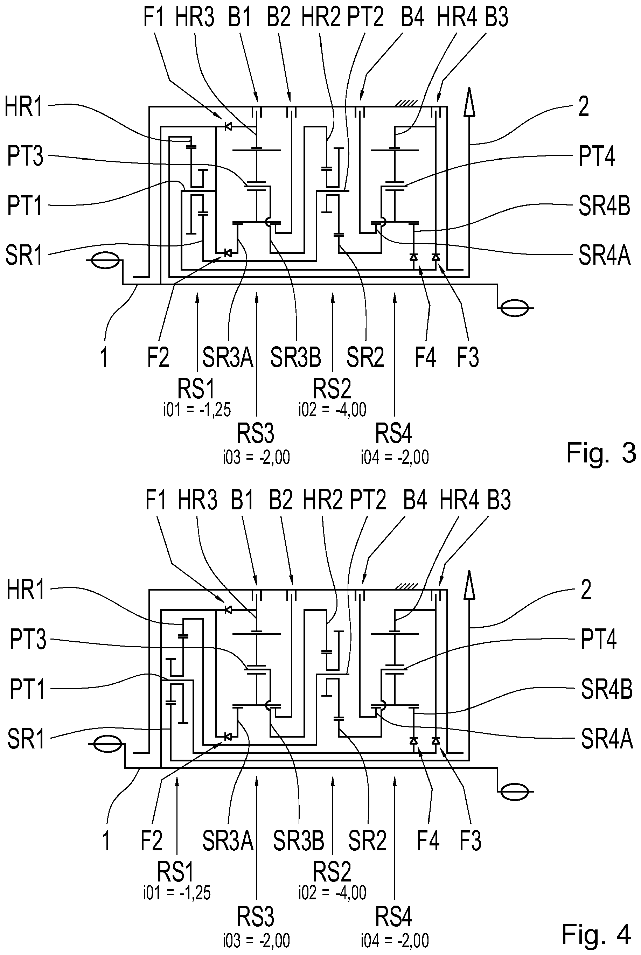

Eine dritte Ausführungsvariante des Mehrstufengetriebes als 16-Gang-Variante ist in Figur 3 dargestellt, wobei die axiale Reihenfolge der Einzelradsätze derart gewählt ist, dass als erster Einzelradsatz der erste Planetenradsatz RS1, als zweiter Einzelradsatz der dritte Planetenradsatz RS3, als dritter Einzelradsatz der zweite Planetenradsatz RS2 und als vierter Einzelradsatz der vierte Planetenradsatz RS4 angeordnet sind. Durch diese axiale Reihenfolge RS1-RS3-RS2-RS4 ergibt sich eine Getriebeausgangswelle 2 mit breiter Lagerbasis.

Im Detail ist bei der dritten Ausführungsvariante vorgesehen, dass der erste Planetenradsatz RS1 mit einem Stufenplaneten ausgeführt ist. Die Getriebeeingangswelle 1 ist mit dem Planetenradträger PT1 des ersten Planetenradsatzes RS1 als Eingangselement verbunden, wobei das mit dem Stufenplaneten in Eingriff stehende Hohlrad HR1 des ersten Planetenradsatzes RS1 als Ausgangselement mit der Getriebeausgangswelle 2 verbunden ist und wobei das mit dem Stufenplaneten in Eingriff stehende Sonnenrad SR1 des ersten Planetenradsatzes RS1 als Koppelelement mit dem Planetenradträger PT2 des zweiten Planetenradsatzes RS2 verbunden ist. Der zweite Planetenradsatz RS2 ist mit einem Stufenplaneten ausgeführt, wobei das mit dem Stufenplaneten in Eingriff stehende Sonnenrad SR2 des zweiten Planetenradsatzes RS2 mit dem Planetenradträger PT4 des vierten Planetenradsatzes RS4 verbunden ist und wobei das mit dem Stufenplaneten in Eingriff stehende Hohlrad HR2 des zweiten Planetenradsatzes RS2 mit dem Planetenradträger PT3 des dritten Planetenradsatzes RS3 verbunden ist. Das Hohlrad HR3 des dritten Planetenradsatzes RS3 ist über die erste Bremse B1 festsetzbar, wobei das Hohlrad HR3 des dritten Planetenradsatzes RS3 über die erste Freilaufkupplung F1 mit dem Planetenradträger PT1 des ersten Planetenradsatzes RS1 verbindbar ist. Ferner ist ein geteiltes Sonnenrad SR3A, SR3B bei dem dritten Planetenradsatz RS3 vorgesehen, wobei ein erstes Sonnenradteil SR3A über die zweite Freilaufkupplung F2 mit dem Planetenradträger PT1 des ersten Planetenradsatzes RS1 verbindbar ist und wobei ein zweites Sonnenradteil SR3B über die zweite Bremse B2 festsetzbar ist. Das Hohlrad HR4 des vierten Planetenradsatzes RS4 ist über die dritte Bremse B3 festsetzbar, wobei das Hohlrad HR4 des vierten Planetenradsatzes RS4 über die dritte Freilaufkupplung F3 mit dem Planetenradträger PT1 des ersten Planetenradsatzes RS1 verbindbar ist. Ferner ist ein geteiltes Sonnenrad SR4A, SR4B bei dem vierten Planetenradsatz RS4 vorgesehen, wobei ein erstes Sonnenradteil SR4A über die vierte Bremse B4 festsetzbar ist und wobei ein zweites Sonnenradteil SR4B über die vierte Freilaufkupplung F4 mit dem Planetenradträger PT1 des ersten Planetenradsatzes RS1 verbindbar ist.

Bei der dritten Ausführungsvariante gemäß Figur 3 sind ebenso wie bei der zweiten Ausführungsvariante die Stufenplaneten bei dem ersten Planetenradsatz RS1 und dem zweiten Planetenradsatz RS2 vorgesehen. Darüber hinaus sind ebenso geteilte Sonnenräder SR3A, SR3B, SR4A, SR4B bei dem dritten Planetenradsatz RS3 und dem vierten Planetenradsatz RS4 vorgesehen.

Eine vierte Ausführungsvariante des Mehrstufengetriebes als 16-Gang-Variante ist in Figur 4 dargestellt, bei der die gleiche axiale Reihenfolge der Einzelradsätze wie bei der dritten Ausführungsvariante vorgesehen ist.

Im Detail ist bei der vierten Ausführungsvariante vorgesehen, dass der erste Planetenradsatz RS1 mit einem Stufenplaneten ausgeführt ist. Die Getriebeeingangswelle 1 ist mit dem Planetenradträger PT1 des ersten Planetenradsatzes RS1 als Eingangselement verbunden, wobei das mit dem Stufenplaneten in Eingriff stehende Sonnenrad SR1 des ersten Planetenradsatzes RS1 als Ausgangselement mit der Getriebeausgangswelle 2 verbunden ist und wobei das mit dem Stufenplaneten in Eingriff stehende Hohlrad HR1 des ersten Planetenradsatzes RS1 als Koppelelement mit dem Planetenradträger PT2 des zweiten Planetenradsatzes RS2 verbunden ist. Der zweite Planetenradsatz RS2 ist mit einem Stufenplaneten ausgeführt, wobei das mit dem Stufenplaneten in Eingriff stehende Hohlrad HR2 des zweiten Planetenradsatzes RS2 mit dem Planetenradträger PT3 des dritten Planetenradsatzes RS3 verbunden ist und wobei das mit dem Stufenplaneten in Eingriff stehende Sonnenrad SR2 des zweiten Planetenradsatzes RS2 mit dem Planetenradträger PT4 des vierten Planetenradsatzes RS4 verbunden ist. Das Hohlrad HR3 des dritten Planetenradsatzes RS3 ist über die erste Bremse B1 festsetzbar, wobei das Hohlrad HR3 des dritten Planetenradsatzes RS3 über die erste Freilaufkupplung F1 mit dem Planetenradträger PT1 des ersten Planetenradsatzes RS1 verbindbar ist. Ferner ist ein geteiltes Sonnenrad SR3A, SR3B bei dem dritten Planetenradsatz RS3 vorgesehen, wobei ein erstes Sonnenradteil SR3A über die zweite Freilaufkupplung F2 mit dem Planetenradträger PT1 des ersten Planetenradsatzes RS1 verbindbar ist und wobei ein zweites Sonnenradteil SR3B über die zweite Bremse B2 festsetzbar ist. Das Hohlrad HR4 des vierten Planetenradsatzes RS4 ist über die dritte Bremse B3 festsetzbar, wobei das Hohlrad HR4 des vierten Planetenradsatzes RS4 über die dritte Freilaufkupplung F3 mit dem Planetenradträger PT1 des ersten Planetenradsatzes RS1 verbindbar ist. Zudem ist ein geteiltes Sonnenrad SR4A, SR4B des vierten Planetenradsatzes RS4 vorgesehen, wobei ein erstes Sonnenradteil SR4A über die vierte Bremse B4 festsetzbar ist und wobei ein zweites Sonnenradteil SR4B über die vierte Freilaufkupplung F4 mit dem Planetenradträger PT1 des ersten Planetenradsatzes RS1 verbindbar ist.

Im Unterschied zur dritten Ausführungsvariante erfolgt bei der vierten Ausführungsvariante gemäß Figur 4 eine Vertauschung der Anbindungen des Sonnenrades SR1 und des Hohlrates HR1 am ersten Planetenradsatz RS1. Hieraus ergibt sich eine größere Gesamtspreizung, d. h. es können mit dieser einfachen Maßnahme 2 Getriebevarianten mit unterschiedlicher Gesamtspreizung erzeugt werden. Mit zusätzlicher Verkleinerung der Standgetriebeübersetzungen i01 am ersten Planetenradsatz RS1 kann die Gesamtspreizung weiter vergrößert werden. Beispielsweise kann bei Vertauschung der Anbindungen an den beiden Stufen des Stufenplaneten des ersten Planetenradsatzes RS1 die Standübersetzung i01 verkleinert werden auf ca. minus 3,1, sodass ohne größeren Umbau ein Getriebe mit einer Gesamtspreizung von 4,1 geschaffen werden kann.

In Figur 5 ist ein Schaltschema der vier Ausführungsvarianten gemäß Figur 1 bis 4 für die Gänge G1 bis G16 beispielhaft dargestellt.

Aus dem Schaltschema gemäß Figur 5 ergibt sich für die vorbeschriebenen Ausführungsvarianten, dass zum Schalten eines ersten Ganges G1 die erste Bremse B1, die zweite Bremse B2, die dritte Bremse B3 und die vierte Bremse B4 geöffnet sind, wobei die erste Freilaufkupplung F1, die zweite Freilaufkupplung F2, die dritte Freilaufkupplung F3 und die vierte Freilaufkupplung F4 im Sperrrichtungszustand sind. Zum Schalten eines zweiten Ganges G2 sind die erste Bremse B1, die zweite Bremse B2 und die dritte Bremse B3 geöffnet und die vierte Bremse B4 geschlossen, wobei die erste Freilaufkupplung F1, die zweite Freilaufkupplung F2 und die dritte Freilaufkupplung F3 im Sperrrichtungszustand und die vierte Freilaufkupplung F4 im Überholtriebzustand sind. Zum Schalten eines dritten Ganges G3 sind die erste Bremse B1, die zweite Bremse B2 und die vierte Bremse B4 geöffnet und die dritte Bremse B3 geschlossen, wobei die erste Freilaufkupplung F1, die zweite Freilaufkupplung F2 und die vierte Freilaufkupplung F4 im Sperrrichtungszustand und die dritte Freilaufkupplung F3 im Überholtriebzustand sind. Zum Schalten eines vierten Ganges G4 sind die erste Bremse B1 und die zweite Bremse B2 geöffnet und die dritte Bremse B3 und die vierte Bremse B4 geschlossen, wobei die erste Freilaufkupplung F1 und die zweite Freilaufkupplung F2 im Sperrrichtungszustand und die dritte Freilaufkupplung F3 und die vierte Freilaufkupplung F4 im Überholtriebzustand sind. Zum Schalten eines fünften Ganges G5 sind die erste Bremse B1, die dritte Bremse B3 und die vierte Bremse B4 geöffnet und die zweite Bremse B2 geschlossen, wobei die erste Freilaufkupplung F1, die dritte Freilaufkupplung F3 und die vierte Freilaufkupplung F4 im Sperrrichtungszustand und die zweite Freilaufkupplung F2 im Überholtriebzustand sind. Zum Schalten eines sechsten Ganges G6 sind die erste Bremse B1 und die dritte Bremse B3 geöffnet und die zweite Bremse B2 und die vierte Bremse B4 geschlossen, wobei die erste Freilaufkupplung F1 und die dritte Freilaufkupplung F3 im Sperrrichtungszustand und die zweite Freilaufkupplung F2 und die vierte Freilaufkupplung F4 im Überholtriebzustand sind. Zum Schalten eines siebten Ganges G7 sind die erste Bremse B1 und die vierte Bremse B4 geöffnet und die zweite Bremse B2 und die dritte Bremse B3 geschlossen, wobei die erste Freilaufkupplung F1 und die vierte Freilaufkupplung F4 im Sperrrichtungszustand und die zweite Freilaufkupplung F2 und die dritte Freilaufkupplung F3 im Überholtriebzustand sind. Zum Schalten eines achten Ganges G8 sind die erste Bremse B1 geöffnet und die zweite Bremse B2, die dritte Bremse B3 und die vierte Bremse B4 geschlossen, wobei die erste Freilaufkupplung F1 im Sperrrichtungszustand und die zweite Freilaufkupplung F2, die dritte Freilaufkupplung F3 und die vierte Freilaufkupplung F4 im Überholtriebzustand sind. Zum Schalten eines neunten Ganges G9 sind die erste Bremse B1 geschlossen und die zweite Bremse B2, die dritte Bremse B3 und die vierte Bremse B4 geöffnet, wobei die erste Freilaufkupplung F1 im Überholtriebzustand und die zweite Freilaufkupplung F2, die dritte Freilaufkupplung F3 und die vierte Freilaufkupplung F4 im Sperrrichtungszustand sind. Zum Schalten eines zehnten Ganges G10 sind die erste Bremse B1 und die vierte Bremse B4 geschlossen und die zweite Bremse B2 und die dritte Bremse B3 geöffnet, wobei die erste Freilaufkupplung F1 und die vierte Freilaufkupplung F4 im Überholtriebzustand und die zweite Freilaufkupplung F2 und die dritte Freilaufkupplung F3 im Sperrrichtungszustand sind. Zum Schalten eines elften Ganges G11 sind die erste Bremse B1 und die dritte Bremse B3 geschlossen und die zweite Bremse B2 und die vierte Bremse B4 geöffnet, wobei die erste Freilaufkupplung F1 und die dritte Freilaufkupplung F3 im Überholtriebzustand und die zweite Freilaufkupplung F2 und die vierte Freilaufkupplung F4 im Sperrrichtungszustand sind. Zum Schalten eines zwölften Ganges G12 sind die erste Bremse B1, die dritte Bremse B3 und die vierte Bremse B4 geschlossen und die zweite Bremse B2 geöffnet, wobei die erste Freilaufkupplung F1, die dritte Freilaufkupplung F3 und die vierte Freilaufkupplung F4 im Überholtriebzustand und die zweite Freilaufkupplung F2 im Sperrrichtungszustand sind. Zum Schalten eines dreizehnten Ganges G13 sind die erste Bremse B1 und die zweite Bremse B2 geschlossen und die dritte Bremse B3 und vierte Bremse B4 geöffnet, wobei die erste Freilaufkupplung F1 und die zweite Freilaufkupplung F2 im Überholtriebzustand und die dritte Freilaufkupplung F3 und die vierte Freilaufkupplung F4 im Sperrrichtungszustand sind. Zum Schalten eines vierzehnten Ganges G14 sind die erste Bremse B1, die zweite Bremse B2 und die vierte Bremse B4 geschlossen und die dritte Bremse B3 geöffnet, wobei die erste Freilaufkupplung F1, die zweite Freilaufkupplung F2 und die vierte Freilaufkupplung F4 im Überholtriebzustand und die dritte Freilaufkupplung F3 im Sperrrichtungszustand sind. Zum Schalten eines fünfzehntes Ganges G15 sind die erste Bremse B1, die zweite Bremse B2 und die dritte Bremse B3 geschlossen und die vierte Bremse B4 geöffnet, wobei die erste Freilaufkupplung F1, die zweite Freilaufkupplung F2 und die dritte Freilaufkupplung F3 im Überholtriebzustand und die vierte Freilaufkupplung F4 im Sperrrichtungszustand sind. Zum Schalten eines sechzehnten Ganges G16 sind die erste Bremse B1, die zweite Bremse B2, die dritte Bremse B3 und die vierte Bremse B4 geschlossen, wobei die erste Freilaufkupplung F1, die zweite Freilaufkupplung F2, die dritte Freilaufkupplung F3 und die vierte Freilaufkupplung F4 im Überholtriebzustand sind.

### Bezugszeichen

- 1: Getriebeeingangswelle
- 2: Getriebeausgangswelle
- B1: erste Bremse
- B2: zweite Bremse
- B3: dritte Bremse
- B4: vierte Bremse
- F1: erste Freilaufkupplung
- F2: zweite Freilaufkupplung
- F3: dritte Freilaufkupplung
- F4: vierte Freilaufkupplung
- G1: erster Gang
- G2: zweiter Gang
- G3: dritter Gang
- G4: vierter Gang
- G5: fünfter Gang
- G6: sechster Gang
- G7: siebter Gang
- G8: achter Gang
- G9: neunter Gang
- G10: zehnter Gang
- G11: elfter Gang
- G12: zwölfter Gang
- G13: dreizehnter Gang
- G14: vierzehnter Gang
- G15: fünfzehnter Gang
- G16: sechzehnter Gang
- HR1: Hohlrad des ersten Planetenradsatzes
- HR2: Hohlrad des zweiten Planetenradsatzes
- HR3: Hohlrad des dritten Planetenradsatzes
- HR3A: erstes Hohlradteil des geteilten Hohlrades
- HR3B: zweites Hohlradteil des geteilten Hohlrades
- HR4: Hohlrad des vierten Planetenradsatzes
- HR4A: erstes Hohlradteil des geteilten Hohlrades
- HR4B: zweites Hohlradteil des geteilten Hohlrades
- PT1: Planetenradträger des ersten Planetenradsatzes
- PT2: Planetenradträger des zweiten Planetenradsatzes
- PT3: Planetenradträger des dritten Planetenradsatzes
- PT4: Planetenradträger des vierten Planetenradsatzes
- RS1: erster Planetenradsatz
- RS2: zweiter Planetenradsatz
- RS3: dritter Planetenradsatz
- RS4: vierter Planetenradsatz
- SR1: Sonnenrad des ersten Planetenradsatzes
- SR2: Sonnenrad des zweiten Planetenradsatzes
- SR3: Sonnenrad des dritten Planetenradsatzes
- SR3A: erstes Sonnenradteil des geteilten Sonnenrades
- SR3B: zweites Sonnenradteil des geteilten Sonnenrades
- SR4: Sonnenrad des vierten Planetenradsatzes
- SR4A: erstes Sonnenradteil des geteilten Sonnenrades
- SR4B: zweites Sonnenradteil des geteilten Sonnenrades
- i01: Standübersetzung des ersten Planetenradsatzes
- i02: Standübersetzung des zweiten Planetenradsatzes
- i03: Standübersetzung des dritten Planetenradsatzes
- i04: Standübersetzung des vierten Planetenradsatzes

## Patentansprüche

1. Mehrstufengetriebe in Planetenbauweise für ein Fahrrad oder ein Pedelec, mit einer Getriebeeingangswelle (1) als Antrieb und einer Getriebeausgangswelle (2) als Abtrieb, mit einem ersten Planetenradsatz (RS1), einem zweiten Planetenradsatz (RS2), einem dritten Planetenradsatz (RS3) und einem vierten Planetenradsatz (RS4), wobei zumindest vier Freilaufkupplungen (F1, F2, F3, F4) und zumindest vier Bremsen (B1, B2, B3, B4) zum Realisieren von zumindest 16 Gängen (G1, G2, G3, G4, G5, G6, G7, G8, G9, G10, G11, G12, G13, G14, G15, G16) vorgesehen sind, wobei ein Eingangselement des ersten Planetenradsatzes (RS1) mit der Getriebeeingangswelle (1) verbunden ist, wobei ein Ausgangselement des ersten Planetenradsatzes (RS1) mit der Getriebeausgangswelle (2) verbunden ist, wobei ein Koppelelement des ersten Planetenradsatzes (RS1) mit einem zweiten Element des zweiten Planetenradsatzes (RS2) verbunden ist, wobei ein erstes Element des zweiten Planetenradsatzes (RS2) mit einem zweiten Element des dritten Planetenradsatzes (RS3) verbunden ist, wobei ein drittes Element des zweiten Planetenradsatzes (RS2) mit einem zweiten Element des vierten Planetenradsatzes (RS4) verbunden ist, wobei ein erstes Element des dritten Planetenradsatzes (RS3) mit einer ersten Bremse (B1) festsetzbar ist, **dadurch gekennzeichnet, dass**
das erste Element des dritten Planetenradsatzes (RS3) über eine erste Freilaufkupplung (F1) mit dem Eingangselement des ersten Planetenradsatzes (RS1) verbindbar ist, wobei ein drittes Element des dritten Planetenradsatzes (RS3) über eine zweite Bremse (B2) festsetzbar ist, wobei das dritte Element des dritten Planetenradsatzes (RS3) über eine zweite Freilaufkupplung (F2) mit dem Eingangselement des ersten Planetenradsatzes (RS1) verbindbar ist, wobei ein erstes Element des vierten Planetenradsatzes (RS4) über eine dritte Bremse (B3) festsetzbar ist, wobei das erste Element des vierten Planetenradsatzes (RS4) über eine dritte Freilaufkupplung (F3) mit dem Eingangselement des ersten Planetenradsatzes (RS1) verbindbar ist, wobei ein drittes Element des vierten Planetenradsatzes (RS4) über eine vierte Bremse (B4) festsetzbar ist und wobei das dritte Element des vierten Planetenradsatzes (RS4) über eine vierte Freilaufkupplung (F4) mit dem Eingangselement des ersten Planetenradsatzes (RS1) verbindbar ist.

2. Mehrstufengetriebe nach Anspruch 1, **dadurch gekennzeichnet, dass** das Eingangselement des ersten Planetenradsatzes (RS1) als zweites Element des ersten Planetenradsatzes (RS1) ausgeführt ist, dass das Ausgangselement des ersten Planetenradsatzes (RS1) als erstes Element oder als drittes Element des ersten Planetenradsatzes (RS1) ausgeführt ist und dass das Koppelelement des ersten Planetenradsatzes (RS1) als drittes Element oder als erstes Element ausgeführt ist.

3. Mehrstufengetriebe nach Anspruch 1 oder 2, **dadurch gekennzeichnet, dass** der erste Planetenradsatz (RS1) und/oder der zweite Planetenradsatz (RS2) und/oder der dritte Planetenradsatz (RS3) und/oder der vierte Planetenradsatz (RS4) als Minus-Planetenradsatz ausgeführt sind.

4. Mehrstufengetriebe nach Anspruch 3, **dadurch gekennzeichnet, dass** bei einem Minus-Planetenradsatz das erste Element als Hohlrad (HR1, HR2, HR3, HR3A, HR3B, HR4, HR4A, HR4B), das zweite Element als Planetenradträger (PT1, PT2, PT3, PT4) und das dritte Element als Sonnenrad (SR1, SR2, SR3, SR3A, SR3B, SR4, SR4A, SR4B) ausgeführt sind.

5. Mehrstufengetriebe nach einem der vorangehenden Ansprüche, **dadurch gekennzeichnet, dass** der erste Planetenradsatz (RS1) und/oder der zweite Planetenradsatz (RS2) und/oder der dritte Planetenradsatz (RS3) und/oder der vierte Planetenradsatz (RS4) jeweils als Plus-Planetenradsatz ausgeführt sind.

6. Mehrstufengetriebe nach Anspruch 5, **dadurch gekennzeichnet, dass** bei einem Plus-Planetenradsatz das erste Element als Planetenradträger (PT1, PT2, PT3, PT4), das zweite Element als Hohlrad (HR1, HR2, HR3, HR3A, HR3B, HR4, HR4A, HR4B) und das dritte Element als Sonnenrad (SR1, SR2, SR3, SR3A, SR3B, SR4, SR4A, SR4B) ausgeführt sind.

7. Mehrstufengetriebe nach einem der vorangehenden Ansprüche, **dadurch gekennzeichnet, dass** zumindest der erste Planetenradsatz (RS1) und/oder der zweite Planetenradsatz (RS2) jeweils einen Stufenplaneten aufweisen.

8. Mehrstufengetriebe nach einem der vorangehenden Ansprüche, **dadurch gekennzeichnet, dass** zumindest dem dritten Planetenradsatz (RS3) und/oder dem vierten Planetenradsatz (RS4) ein geteiltes Sonnenrad (SR3A, SR3B, SR4A, SR4B) mit einem ersten Sonnenradteil (SR3A, SR4A) und einem zweiten Sonnenradteil (SR3B, SR4B) vorgesehen ist, wobei das erste Sonnenradteil (SR3A, SR4A) und das zweite Sonnenradteil (SR3B, SR4B) miteinander wirkverbunden sind.

9. Mehrstufengetriebe nach einem der vorangehenden Ansprüche, **dadurch gekennzeichnet, dass** zumindest bei dem dritten Planetenradsatz (RS3) und/oder dem vierten Planetenradsatz (RS4) ein geteiltes Hohlrad (HR3A, HR3B, HR4A, HR4B) mit einem ersten Hohlradteil (HR3A, HR4A) und einem zweiten Hohlradteil (HR3B, HR4B) vorgesehen sind, wobei das erste Hohlradteil (HR3A, HR4A) und das zweite Hohlradteil (HR3B, HR4B) miteinander wirkverbunden sind.

10. Mehrstufengetriebe nach einem der vorangehenden Ansprüche, **dadurch gekennzeichnet, dass** die axiale Reihenfolge der Einzelradsätze derart gewählt ist, dass als erster Einzelradsatz der vierte Planetenradsatz (RS4), als zweiter Einzelradsatz der zweite Planetenradsatz (RS2), als dritter Einzelradsatz der dritte Planetenradsatz (RS3) und als vierter Einzelradsatz der erste Planetenradsatz (RS1) angeordnet sind.

11. Mehrstufengetriebe nach einem der Ansprüche 1 bis 10, **dadurch gekennzeichnet, dass** die axiale Reihenfolge der Einzelradsätze derart gewählt ist, dass als erster Einzelradsatz der erste Planetenradsatz (RS1), als zweiter Einzelradsatz der dritte Planetenradsatz (RS3), als dritter Einzelradsatz der zweite Planetenradsatz (RS2) und als vierter Einzelradsatz der vierte Planetenradsatz (RS4) angeordnet sind.

12. Mehrstufengetriebe nach einem der vorangehenden Ansprüche, **dadurch gekennzeichnet, dass** die Getriebeeingangswelle (1) mit einem Planetenradträger (PT1) des ersten Planetenradsatzes (RS1) als Eingangselement verbunden ist, dass ein Hohlrad (HR1) des ersten Planetenradsatzes (RS1) als Ausgangselement mit der Getriebeausgangswelle (2) verbunden ist, dass ein Sonnenrad (SR1) des ersten Planetenradsatzes (RS1) als Koppelelement mit einem Planetenradträger (PT2) des zweiten Planetenradsatzes RS2) verbunden ist, dass ein Hohlrad (HR2) des zweiten Planetenradsatzes (RS2) mit einem Planetenradträger (PT3) des dritten Planetenradsatzes (RS3) verbunden ist, dass ein Sonnenrad (SR2) des zweiten Planetenradsatzes (RS2) mit einem Planetenradträger (PT4) des vierten Planetenradsatzes (RS4) verbunden ist, dass ein Sonnenrad (SR3) des dritten Planetenradsatzes (RS3) über eine zweite Bremse (B2) festsetzbar ist, dass das Sonnenrad (SR3) des dritten Planetenradsatzes (RS3) über eine zweite Freilaufkupplung (F2) mit dem Planetenradträger (PT1) des ersten Planetenradsatzes (RS1) verbindbar ist, dass ein geteiltes Hohlrad (HR3A, HR3B) bei dem dritten Planetenradsatz (RS3) vorgesehen ist, wobei ein erstes Hohlradteil (HR3A) über eine erste Freilaufkupplung (F1) mit dem Planetenradträger (PT1) des ersten Planetenradsatzes (RS1) verbindbar ist und wobei ein zweites Hohlradteil (HR3B) über eine erste Bremse (B1) festsetzbar ist, dass ein Sonnenrad (SR4) des vierten Planetenradsatzes (RS4) über eine vierte Bremse (B4) festsetzbar ist, dass das Sonnenrad (SR4) des vierten Planetenradsatzes (RS4) über eine vierte Freilaufkupplung (F4) mit dem Planetenradträger (PT1) des ersten Planetenradsatzes (RS1) verbindbar ist, und dass ein geteiltes Hohlrad (HR4A, HR4B) bei dem vierten Planetenradsatz (RS4) vorgesehen ist, wobei ein erstes Hohlradteil (HR4A) über eine dritte Bremse (B3) festsetzbar ist und wobei ein zweites Hohlradteil (HR4B) über eine dritte Freilaufkupplung (F3) mit dem Planetenradträger (PT1) des ersten Planetenradsatzes (RS1) verbindbar ist. (Figur 1)

13. Mehrstufengetriebe nach einem der Ansprüche 1 bis 11, **dadurch gekennzeichnet, dass** der erste Planetenradsatz (RS1) mit einem Stufenplaneten ausgeführt ist, dass die Getriebeeingangswelle (1) mit dem Planetenradträger (PT1) des ersten Planetenradsatzes (RS1) als Eingangselement verbunden ist, dass das mit dem Stufenplaneten in Eingriff stehende Hohlrad (HR1) des ersten Planetenradsatzes (RS1) als Ausgangselement mit der Getriebeausgangswelle (2) verbunden ist, dass das mit dem Stufenplaneten in Eingriff stehende Sonnenrad (SR1) des ersten Planetenradsatzes (RS1) als Koppelelement mit dem Planetenradträger (PT2) des zweiten Planetenradsatzes (RS2) verbunden ist, dass der zweite Planetenradsatz (RS2) mit einem Stufenplaneten ausgeführt ist, dass das mit dem Stufenplaneten in Eingriff stehende Sonnenrad (SR2) des zweiten Planetenradsatzes (RS2) mit dem Planetenradträger (PT4) des vierten Planetenradsatzes (RS4) verbunden ist, dass das mit dem Stufenplaneten in Eingriff stehende Hohlrad (HR2) des zweiten Planetenradsatzes (RS2) mit dem Planetenradträger (PT3) des dritten Planetenradsatzes (RS3) verbunden ist, dass das Hohlrad (HR3) des dritten Planetenradsatzes (RS3) über die erste Bremse (B1) festsetzbar ist, dass das Hohlrad (HR3) des dritten Planetenradsatzes (RS3) über die erste Freilaufkupplung (F1) mit dem Planetenradträger (PT1) des ersten Planetenradsatzes (RS1) verbindbar ist, dass ein geteiltes Sonnenrad (SR3A, SR3B) bei dem dritten Planetenradsatz (RS3) vorgesehen ist, wobei ein erstes Sonnenradteil (SR3A) über die zweite Bremse (B2) festsetzbar ist und wobei ein zweites Sonnenradteil (SR3B) über die zweite Freilaufkupplung (F2) mit dem Planetenradträger (PT1) des ersten Planetenradsatzes (RS1) verbindbar ist, dass das Hohlrad (HR4) des vierten Planetenradsatzes (RS4) über die dritte Bremse (B3) festsetzbar ist, dass das Hohlrad (HR4) des vierten Planetenradsatzes (RS4) über die dritte Freilaufkupplung (F3) mit dem Planetenradträger (PT1) des ersten Planetenradsatzes (RS1) verbindbar ist und dass ein geteiltes Sonnenrad (SR4A, SR4B) bei dem vierten Planetenradsatz (RS4) vorgesehen ist, wobei ein erstes Sonnenradteil (SR4A) über eine vierte Freilaufkupplung (F4) mit dem Planetenradträger (PT1) des ersten Planetenradsatzes (RS1) verbindbar ist und wobei ein zweites Sonnenradteil (SR4B) über die vierte Bremse (B4) festsetzbar ist. (Figur 2)

14. Mehrstufengetriebe nach einem der Ansprüche 1 bis 11, **dadurch gekennzeichnet, dass** der erste Planetenradsatz (RS1) mit einem Stufenplaneten ausgeführt ist, dass die Getriebeeingangswelle (1) mit dem Planetenradträger (PT1) des ersten Planetenradsatzes (RS1) als Eingangselement verbunden ist, dass das mit dem Stufenplaneten in Eingriff stehende Hohlrad (HR1) des ersten Planetenradsatzes (RS1) als Ausgangselement mit der Getriebeausgangswelle (2) verbunden ist, dass das mit dem Stufenplaneten in Eingriff stehende Sonnenrad (SR1) des ersten Planetenradsatzes (RS1) als Koppelelement mit dem Planetenradträger (PT2) des zweiten Planetenradsatzes (RS2) verbunden ist, dass der zweite Planetenradsatz (RS2) mit einem Stufenplaneten ausgeführt ist, dass das mit dem Stufenplaneten in Eingriff stehende Sonnenrad (SR2) des zweiten Planetenradsatzes (RS2) mit dem Planetenradträger (PT4) des vierten Planetenradsatzes (RS4) verbunden ist, dass das mit dem Stufenplaneten in Eingriff stehende Hohlrad (HR2) des zweiten Planetenradsatzes (RS2) mit dem Planetenradträger (PT3) des dritten Planetenradsatzes (RS3) verbunden ist, dass das Hohlrad (HR3) des dritten Planetenradsatzes (RS3) über die erste Bremse (B1) festsetzbar ist, dass das Hohlrad (HR3) des dritten Planetenradsatzes (RS3) über die erste Freilaufkupplung (F1) mit dem Planetenradträger (PT1) des ersten Planetenradsatzes (RS1) verbindbar ist, dass ein geteiltes Sonnenrad (SR3A, SR3B) bei dem dritten Planetenradsatz (RS3) vorgesehen ist, wobei ein erstes Sonnenradteil (SR3A) über die zweite Freilaufkupplung (F2) mit dem Planetenradträger (PT1) des ersten Planetenradsatzes (RS1) verbindbar ist und wobei ein zweites Sonnenradteil (SR3B) über die zweite Bremse (B2) festsetzbar ist, dass das Hohlrad (HR4) des vierten Planetenradsatzes (RS4) über die dritte Bremse (B3) festsetzbar ist, dass das Hohlrad (HR4) des vierten Planetenradsatzes (RS4) über die dritte Freilaufkupplung (F3) mit dem Planetenradträger (PT1) des ersten Planetenradsatzes (RS1) verbindbar ist und dass ein geteiltes Sonnenrad (SR4A, SR4B) bei dem vierten Planetenradsatz (RS4) vorgesehen ist, wobei ein erstes Sonnenradteil (SR4A) über die vierte Bremse (B4) festsetzbar ist und wobei ein zweites Sonnenradteil (SR4B) über die vierte Freilaufkupplung (F4) mit dem Planetenradträger (PT1) des ersten Planetenradsatzes (RS1) verbindbar ist. (Figur 3)

15. Mehrstufengetriebe nach einem der Ansprüche 1 bis 11, **dadurch gekennzeichnet, dass** der erste Planetenradsatz (RS1) mit einem Stufenplaneten ausgeführt ist, dass die Getriebeeingangswelle (1) mit dem Planetenradträger (PT1) des ersten Planetenradsatzes (RS1) als Eingangselement verbunden ist, dass das mit dem Stufenplaneten in Eingriff stehende Sonnenrad (SR1) des ersten Planetenradsatzes (RS1) als Ausgangselement mit der Getriebeausgangswelle (2) verbunden ist, dass das mit dem Stufenplaneten in Eingriff stehende Hohlrad (HR1) des ersten Planetenradsatzes (RS1) als Koppelelement mit dem Planetenradträger (PT2) des zweiten Planetenradsatzes (RS2) verbunden ist, dass der zweite Planetenradsatz (RS2) mit einem Stufenplaneten ausgeführt ist, dass das mit dem Stufenplaneten in Eingriff stehende Hohlrad (HR2) des zweiten Planetenradsatzes (RS2) mit dem Planetenradträger (PT3) des dritten Planetenradsatzes (RS3) verbunden ist, dass das mit dem Stufenplaneten in Eingriff stehende Sonnenrad (SR2) des zweiten Planetenradsatzes (RS2) mit dem Planetenradträger (PT4) des vierten Planetenradsatzes (RS4) verbunden ist, dass das Hohlrad (HR3) des dritten Planetenradsatzes (RS3) über die erste Bremse (B1) festsetzbar ist, dass das Hohlrad (HR3) des dritten Planetenradsatzes (RS3) über die erste Freilaufkupplung (F1) mit dem Planetenradträger (PT1) des ersten Planetenradsatzes (RS1) verbindbar ist, dass ein geteiltes Sonnenrad (SR3A, SR3B) bei dem dritten Planetenradsatz (RS3) vorgesehen ist, wobei ein erstes Sonnenradteil (SR3A) über die zweite Freilaufkupplung (F2) mit dem Planetenradträger (PT1) des ersten Planetenradsatzes (RS1) verbindbar ist und wobei ein zweites Sonnenradteil (SR3B) über die zweite Bremse (B2) festsetzbar ist, dass das Hohlrad (HR4) des vierten Planetenradsatzes (RS4) über die dritte Bremse (B3) festsetzbar ist, dass das Hohlrad (HR4) des vierten Planetenradsatzes (RS4) über die dritte Freilaufkupplung (F3) mit dem Planetenradträger (PT1) des ersten Planetenradsatzes (RS1) verbindbar ist, und dass ein geteiltes Sonnenrad (SR4A, SR4B) des vierten Planetenradsatzes (RS4) vorgesehen ist, wobei ein erstes Sonnenradteil (SR4A) über die vierte Bremse (B4) festsetzbar ist und wobei ein zweites Sonnenradteil (SR4B) über die dritte Freilaufkupplung (F3) mit dem Planetenradträger (PT1) des ersten Planetenradsatzes (RS1) verbindbar ist. (Figur 4)

16. Mehrstufengetriebe nach einem der vorangehenden Ansprüche, **dadurch gekennzeichnet, dass** zum Schalten eines ersten Ganges (G1) die erste Bremse (B1), die zweite Bremse (B2), die dritte Bremse (B3) und die vierte Bremse (B4) geöffnet sind, wobei die erste Freilaufkupplung (F1), die zweite Freilaufkupplung (F2), die dritte Freilaufkupplung (F3) und die vierte Freilaufkupplung (F4) im Sperrrichtungszustand sind, und/oder dass zum Schalten eines zweiten Ganges (G2) die erste Bremse (B1), die zweite Bremse (B2) und die dritte Bremse (B3) geöffnet und die vierte Bremse (B4) geschlossen sind, wobei die erste Freilaufkupplung (F1), die zweite Freilaufkupplung (F2) und die dritte Freilaufkupplung (F3) im Sperrrichtungszustand und die vierte Freilaufkupplung (F4) im Überholtriebzustand sind, und/oder dass zum Schalten eines dritten Ganges (G3) die erste Bremse (B1), die zweite Bremse (B2) und die vierte Bremse (B4) geöffnet und die dritte Bremse (B3) geschlossen sind, wobei die erste Freilaufkupplung (F1), die zweite Freilaufkupplung (F2) und die vierte Freilaufkupplung (F4) im Sperrrichtungszustand und die dritte Freilaufkupplung (F3) im Überholtriebzustand sind, und/oder dass zum Schalten eines vierten Ganges (G4) die erste Bremse (B1) und die zweite Bremse (B2) geöffnet und die dritte Bremse (B3) und die vierte Bremse (B4) geschlossen sind, wobei die erste Freilaufkupplung (F1) und die zweite Freilaufkupplung (F2) im Sperrrichtungszustand und die dritte Freilaufkupplung (F3) und die vierte Freilaufkupplung (F4) im Überholtriebzustand sind, und/oder dass zum Schalten eines fünften Ganges (G5) die erste Bremse (B1), die dritte Bremse (B3) und die vierte Bremse (B4) geöffnet und die zweite Bremse (B2) geschlossen sind, wobei die erste Freilaufkupplung (F1), die dritte Freilaufkupplung (F3) und die vierte Freilaufkupplung (F4) im Sperrrichtungszustand und die zweite Freilaufkupplung (F2) im Überholtriebzustand sind, und/oder dass zum Schalten eines sechsten Ganges (G6) die erste Bremse (B1) und die dritte Bremse (B3) geöffnet und die zweite Bremse (B2) und die vierte Bremse (B4) geschlossen sind, wobei die erste Freilaufkupplung (F1) und die dritte Freilaufkupplung (F3) im Sperrrichtungszustand und die zweite Freilaufkupplung (F2) und die vierte Freilaufkupplung (F4) im Überholtriebzustand sind, und/oder dass zum Schalten eines siebten Ganges (G7) die erste Bremse (B1) und die vierte Bremse (B4) geöffnet und die zweite Bremse (B2) und die dritte Bremse (B3) geschlossen sind, wobei die erste Freilaufkupplung (F1) und vierte Freilaufkupplung (F4) im Sperrrichtungszustand und die zweite Freilaufkupplung (F2) und die dritte Freilaufkupplung (F3) im Überholtriebzustand sind, und/oder dass zum Schalten eines achten Ganges (G8) die erste Bremse (B1) geöffnet und die zweite Bremse (B2), die dritte Bremse (B3) und die vierte Bremse (B4) geschlossen sind, wobei die erste Freilaufkupplung (F1) im Sperrrichtungszustand und die zweite Freilaufkupplung (F2), die dritte Freilaufkupplung (F3) und die vierte Freilaufkupplung (F4) im Überholtriebzustand sind, und/oder dass zum Schalten eines neunten Ganges (G9) die erste Bremse (B1) geschlossen und die zweite Bremse (B2), die dritte Bremse (B3) und die vierte Bremse (B4) geöffnet sind, wobei die erste Freilaufkupplung (F1) im Überholtriebzustand und die zweite Freilaufkupplung (F2), die dritte Freilaufkupplung (F3) und die vierte Freilaufkupplung (F4) im Sperrrichtungszustand sind, und/oder dass zum Schalten eines zehnten Ganges (G10) die erste Bremse (B1) und die vierte Bremse (B4) geschlossen und die zweite Bremse (B2) und die dritte Bremse (B3) geöffnet sind, wobei die erste Freilaufkupplung (F1) und die vierte Freilaufkupplung (F4) im Überholtriebzustand und die zweite Freilaufkupplung (F2) und die dritte Freilaufkupplung (F3) im Sperrrichtungszustand sind, und/oder dass zum Schalten eines elften Ganges (G11) die erste Bremse (B1) und die dritte Bremse (B3) geschlossen und die zweite Bremse (B2) und die vierte Bremse (B4) geöffnet sind, wobei die erste Freilaufkupplung (F1) und die dritte Freilaufkupplung (F3) im Überholtriebzustand und die zweite Freilaufkupplung (F2) und die vierte Freilaufkupplung (F4) im Sperrrichtungszustand sind, und/oder dass zum Schalten eines zwölften Ganges (G12) die erste Bremse (B1), die dritte Bremse (B3) und die vierte Bremse (B4) geschlossen und die zweite Bremse (B2) geöffnet sind, wobei die erste Freilaufkupplung (F1), die dritte Freilaufkupplung (F3) und die vierte Freilaufkupplung (F4) im Überholtriebzustand und die zweite Freilaufkupplung (F2) im Sperrrichtungszustand sind, und/oder dass zum Schalten eines dreizehnten Ganges (G13) die erste Bremse (B1) und die zweite Bremse (B2) geschlossen und die dritte Bremse (B3) und vierte Bremse (B4) geöffnet sind, wobei die erste Freilaufkupplung (F1) und die zweite Freilaufkupplung (F2) im Überholtriebzustand und die dritte Freilaufkupplung (F3) und die vierte Freilaufkupplung (F4) im Sperrrichtungszustand sind, und/oder dass zum Schalten eines vierzehnten Ganges (G14) die erste Bremse (B1), die zweite Bremse (B2) und die vierte Bremse (B4) geschlossen und die dritte Bremse (B3) geöffnet sind, wobei die erste Freilaufkupplung (F1), die zweite Freilaufkupplung (F2) und die vierte Freilaufkupplung (F4) im Überholtriebzustand und die dritte Freilaufkupplung (F3) im Sperrrichtungszustand sind, und/oder dass zum Schalten eines fünfzehntes Ganges (G15) die erste Bremse (B1), die zweite Bremse (B2) und die dritte Bremse (B3) geschlossen und die vierte Bremse (B4) geöffnet sind, wobei die erste Freilaufkupplung (F1), die zweite Freilaufkupplung (F2) und die dritte Freilaufkupplung (F3) im Überholtriebzustand und die vierte Freilaufkupplung (F4) im Sperrrichtungszustand sind, und/oder dass zum Schalten eines sechzehnten Ganges (G16) die erste Bremse (B1), die zweite Bremse (B2), die dritte Bremse (B3) und die vierte Bremse (B4) geschlossen sind, wobei die erste Freilaufkupplung (F1), die zweite Freilaufkupplung (F2), die dritte Freilaufkupplung (F3) und die vierte Freilaufkupplung (F4) im Überholtriebzustand sind.

17. Mehrstufengetriebe nach einem der vorangehenden Ansprüche, **dadurch gekennzeichnet, dass** das Mehrstufengetriebe als Tretlagergetriebe mit koaxial zueinander angeordneten Planetenradsätzen (RS1, RS2, RS23, RS4) ausgeführt ist, wobei die Getriebeeingangswelle (1) als zentrale Tretlagerkurbelwelle ausgeführt ist.

18. Mehrstufengetriebe nach einem der vorangehenden Ansprüche, **dadurch gekennzeichnet, dass** zumindest eine elektrische Maschine vorgesehen ist.

19. Fahrrad oder Pedelec mit einem Mehrstufengetriebe nach einem der vorangehenden Ansprüche.

## Claims

1. Multi-stage planetary transmission for a bicycle or a pedelec, having a transmission input shaft (1) as input drive and a transmission output shaft (2) as output drive, having a first planetary gear set (RS1), a second planetary gear set (RS2), a third planetary gear set (RS3) and a fourth planetary gear set (RS4), wherein at least four free-wheel clutches (F1, F2, F3, F4) and at least four brakes (B1, B2, B3, B4) are provided for realizing at least sixteen gears (G1, G2, G3, G4, G5, G6, G7, G8, G9, G10, G11, G12, G13, G14, G15, G16), wherein an input element of the first planetary gear set (RS1) is connected to the transmission input shaft (1), wherein an output element of the first planetary gear set (RS1) is connected to the transmission output shaft (2), wherein a coupling element of the first planetary gear set (RS1) is connected to a second element of the second planetary gear set (RS2), wherein a first element of the second planetary gear set (RS2) is connected to a second element of the third planetary gear set (RS3), wherein a third element of the second planetary gear set (RS2) is connected to a second element of the fourth planetary gear set (RS4), wherein a first element of the third planetary gear set (RS3) is fixable to a first brake (B1), **characterized in that** the first element of the third planetary gear set (RS3) is connectable via a first free-wheel clutch (F1) to the input element of the first planetary gear set (RS1), wherein a third element of the third planetary gear set (RS3) is fixable via a second brake (B2), wherein the third element of the third planetary gear set (RS3) is connectable via a second free-wheel clutch (F2) to the input element of the first planetary gear set (RS1), wherein a first element of the fourth planetary gear set (RS4) is fixable via a third brake (B3), wherein the first element of the fourth planetary gear set (RS4) is connectable via a third free-wheel clutch (F3) to the input element of the first planetary gear set (RS1), wherein a third element of the fourth planetary gear set (RS4) is fixable via a fourth brake (B4), and wherein the third element of the fourth planetary gear set (RS4) is connectable via a fourth free-wheel clutch (F4) to the input element of the first planetary gear set (RS1).

2. Multi-stage transmission according to Claim 1, **characterized in that** the input element of the first planetary gear set (RS1) is designed as a second element of the first planetary gear set (RS1), **in that** the output element of the first planetary gear set (RS1) is designed as a first element or as a third element of the first planetary gear set (RS1), and **in that** the coupling element of the first planetary gear set (RS1) is designed as a third element or as a first element.

3. Multi-stage transmission according to Claim 1 or 2, **characterized in that** the first planetary gear set (RS1) and/or the second planetary gear set (RS2) and/or the third planetary gear set (RS3) and/or the fourth planetary gear set (RS4) are designed as a minus planetary gear set.

4. Multi-stage transmission according to Claim 3, **characterized in that**, in the case of a minus planetary gear set, the first element is designed as a ring gear (HR1, HR2, HR3, HR3A, HR3B, HR4, HR4A, HR4B), the second element as a planet carrier (PT1, PT2, PT3, PT4) and the third element as a sun gear (SR1, SR2, SR3, SR3A, SR3B, SR4, SR4A, SR4B).

5. Multi-stage transmission according to one of the preceding claims, **characterized in that** the first planetary gear set (RS1) and/or the second planetary gear set (RS2) and/or the third planetary gear set (RS3) and/or the fourth planetary gear set (RS4) are each designed as a plus planetary gear set.

6. Multi-stage transmission according to Claim 5, **characterized in that**, in the case of a plus planetary gear set, the first element is designed as a planet carrier (PT1, PT2, PT3, PT4), the second element as a ring gear (HR1, HR2, HR3, HR3A, HR3B, HR4, HR4A, HR4B) and the third element as a sun gear (SR1, SR2, SR3, SR3A, SR3B, SR4, SR4A, SR4B).

7. Multi-stage transmission according to one of the preceding claims, **characterized in that** at least the first planetary gear set (RS1) and/or the second planetary gear set (RS2) each have a stepped planetary gear.

8. Multi-stage transmission according to one of the preceding claims, **characterized in that** at least in the case of the third planetary gear set (RS3) and/or the fourth planetary gear set (RS4) a divided sun gear (SR3A, SR3B, SR4A, SR4B) having a first sun gear part (SR3A, SR4A) and a second sun gear part (SR3B, SR4B) is provided, wherein the first sun gear part (SR3A, SR4A) and the second sun gear part (SR3B, SR4B) are operatively connected to each other.

9. Multi-stage transmission according to one of the preceding claims, **characterized in that** at least in the case of the third planetary gear set (RS3) and/or the fourth planetary gear set (RS4) a divided ring gear (HR3A, HR3B, HR4A, HR4B) having a first ring gear part (HR3A, HR4A) and a second ring gear part (HR3B, HR4B) is provided, wherein the first ring gear part (HR3A, HR4A) and the second ring gear part (HR3B, HR4B) are operatively connected to each other.

10. Multi-stage transmission according to one of the preceding claims, **characterized in that** the axial sequence of the individual gear sets is selected in such a manner that the fourth planetary gear set (RS4) is arranged as a first individual gear set, the second planetary gear set (RS2) as a second individual gear set, the third planetary gear set (RS3) as a third individual gear set, and the first planetary gear set (RS1) as a fourth individual gear set.

11. Multi-stage transmission according to one of Claims 1 to 10, **characterized in that** the axial sequence of the individual gear sets is selected in such a manner that the first planetary gear set (RS1) is arranged as a first individual gear set, the third planetary gear set (RS3) as a second individual gear set, the second planetary gear set (RS2) as a third individual gear set, and the fourth planetary gear set (RS4) as a fourth individual gear set.

12. Multi-stage transmission according to one of the preceding claims, **characterized in that** the transmission input shaft (1) is connected to a planet carrier (PT1) of the first planetary gear set (RS1) as input element, **in that** a ring gear (HR1) of the first planetary gear set (RS1) is connected as output element to the transmission output shaft (2), **in that** a sun gear (SR1) of the first planetary gear set (RS1) is connected as coupling element to a planet carrier (PT2) of the second planetary gear set (RS2), **in that** a ring gear (HR2) of the second planetary gear set (RS2) is connected to a planet carrier (PT3) of the third planetary gear set (RS3), **in that** a sun gear (SR2) of the second planetary gear set (RS2) is connected to a planet carrier (PT4) of the fourth planetary gear set (RS4), **in that** a sun gear (SR3) of the third planetary gear set (RS3) is fixable via a second brake (B2), **in that** the sun gear (SR3) of the third planetary gear set (RS3) is connectable via a second free-wheel clutch (F2) to the planet carrier (PT1) of the first planetary gear set (RS1), **in that** a divided ring gear (HR3A, HR3B) is provided in the case of the third planetary gear set (RS3), wherein a first ring gear part (HR3A) is connectable via a first free-wheel clutch (F1) to the planet carrier (PT1) of the first planetary gear set (RS1), and wherein a second ring gear part (HR3B) is fixable via a first brake (B1), **in that** a sun gear (SR4) of the fourth planetary gear set (RS4) is fixable via a fourth brake (B4), **in that** the sun gear (SR4) of the fourth planetary gear set (RS4) is connectable via a fourth free-wheel clutch (F4) to the planet carrier (PT1) of the first planetary gear set (RS1), and **in that** a divided ring gear (HR4A, HR4B) is provided in the case of the fourth planetary gear set (RS4), wherein a first ring gear part (HR4A) is fixable via a third brake (B3), and wherein a second ring gear part (HR4B) is connectable via a third free-wheel clutch (F3) to the planet carrier (PT1) of the first planetary gear set (RS1). (Figure 1).

13. Multi-stage transmission according to one of Claims 1 to 11, **characterized in that** the first planetary gear set (RS1) is designed with a stepped planetary gear, **in that** the transmission input shaft (1) is connected to the planet carrier (PT1) of the first planetary gear set (RS1) as input element, **in that** the ring gear (HR1) of the first planetary gear set (RS1), which ring gear is in engagement with the stepped planetary gear, is connected as output element to the transmission output shaft (2), **in that** the sun gear (SR1) of the first planetary gear set (RS1), which sun gear is in engagement with the stepped planetary gear, is connected as coupling element to the planet carrier (PT2) of the second planetary gear set (RS2), **in that** the second planetary gear set (RS2) is designed with a stepped planetary gear, **in that** the sun gear (SR2) of the second planetary gear set (RS2), which sun gear is in engagement with the stepped planetary gear, is connected to the planet carrier (PT4) of the fourth planetary gear set (RS4), **in that** the ring gear (HR2) of the second planetary gear set (RS2), which ring gear is in engagement with the stepped planetary gear, is connected to the planet carrier (PT3) of the third planetary gear set (RS3), **in that** the ring gear (HR3) of the third planetary gear set (RS3) is fixable via the first brake (B1), **in that** the ring gear (HR3) of the third planetary gear set (RS3) is connectable via the first free-wheel clutch (F1) to the planet carrier (PT1) of the first planetary gear set (RS1), **in that** a divided sun gear (SR3A, SR3B) is provided in the case of the third planetary gear set (RS3), wherein a first sun gear part (SR3A) is fixable via the second brake (B2), and wherein a second sun gear part (SR3B) is connectable via the second free-wheel clutch (F2) to the planet carrier (PT1) of the first planetary gear set (RS1), **in that** the ring gear (HR4) of the fourth planetary gear set (RS4) is fixable via the third brake (B3), **in that** the ring gear (HR4) of the fourth planetary gear set (RS4) is connectable via the third free-wheel clutch (F3) to the planet carrier (PT1) of the first planetary gear set (RS1), and **in that** a divided sun gear (SR4A, SR4B) is provided in the case of the fourth planetary gear set (RS4), wherein a first sun gear part (SR4A) is connectable via a fourth free-wheel clutch (F4) to the planet carrier (PT1) of the first planetary gear set (RS1), and wherein a second sun gear part (SR4B) is fixable via the fourth brake (B4). (Figure 2)

14. Multi-stage transmission according to one of Claims 1 to 11, **characterized in that** the first planetary gear set (RS1) is designed with a stepped planetary gear, **in that** the transmission input shaft (1) is connected to the planet carrier (PT1) of the first planetary gear set (RS1) as input element, **in that** the ring gear (HR1) of the first planetary gear set (RS1), which ring gear is in engagement with the stepped planetary gear, is connected as output element to the transmission output shaft (2), **in that** the sun gear (SR1) of the first planetary gear set (RS1), which sun gear is in engagement with the stepped planetary gear, is connected as coupling element to the planet carrier (PT2) of the second planetary gear set (RS2), **in that** the second planetary gear set (RS2) is designed with a stepped planetary gear, **in that** the sun gear (SR2) of the second planetary gear set (RS2), which sun gear is in engagement with the stepped planetary gear, is connected to the planet carrier (PT4) of the fourth planetary gear set (RS4), **in that** the ring gear (HR2) of the second planetary gear set (RS2), which ring gear is in engagement with the stepped planetary gear, is connected to the planet carrier (PT3) of the third planetary gear set (RS3), **in that** the ring gear (HR3) of the third planetary gear set (RS3) is fixable via the first brake (B1), **in that** the ring gear (HR3) of the third planetary gear set (RS3) is connectable via the first free-wheel clutch (F1) to the planet carrier (PT1) of the first planetary gear set (RS1), **in that** a divided sun gear (SR3A, SR3B) is provided in the case of the third planetary gear set (RS3), wherein a first sun gear part (SR3A) is connectable via the second free-wheel clutch (F2) to the planet carrier (PT1) of the first planetary gear set (RS1), and wherein a second sun gear part (SR3B) is fixable via the second brake (B2), **in that** the ring gear (HR4) of the fourth planetary gear set (RS4) is fixable via the third brake (B3), **in that** the ring gear (HR4) of the fourth planetary gear set (RS4) is connectable via the third free-wheel clutch (F3) to the planet carrier (PT1) of the first planetary gear set (RS1), and **in that** a divided sun gear (SR4A, SR4B) is provided in the case of the fourth planetary gear set (RS4), wherein a first sun gear part (SR4A) is fixable via the fourth brake (B4), and wherein a second sun gear part (SR4B) is connectable via the fourth free-wheel clutch (F4) to the planet carrier (PT1) of the first planetary gear set (RS1). (Figure 3)

15. Multi-stage transmission according to one of Claims 1 to 11, **characterized in that** the first planetary gear set (RS1) is designed with a stepped planetary gear, **in that** the transmission input shaft (1) is connected to the planet carrier (PT1) of the first planetary gear set (RS1) as input element, **in that** the sun gear (SR1) of the first planetary gear set (RS1), which sun gear is in engagement with the stepped planetary gear, is connected as output element to the transmission output shaft (2), **in that** the ring gear (HR1) of the first planetary gear set (RS1), which ring gear is in engagement with the stepped planetary gear, is connected as coupling element to the planet carrier (PT2) of the second planetary gear set (RS2), **in that** the second planetary gear set (RS2) is designed with a stepped planetary gear, **in that** the ring gear (HR2) of the second planetary gear set (RS2), which ring gear is in engagement with the stepped planetary gear, is connected to the planet carrier (PT3) of the third planetary gear set (RS3), **in that** the sun gear (SR2) of the second planetary gear set (RS2), which sun gear is in engagement with the stepped planetary gear, is connected to the planet carrier (PT4) of the fourth planetary gear set (RS4), **in that** the ring gear (HR3) of the third planetary gear set (RS3) is fixable via the first brake (B1), **in that** the ring gear (HR3) of the third planetary gear set (RS3) is connectable via the first free-wheel clutch (F1) to the planet carrier (PT1) of the first planetary gear set (RS1), **in that** a divided sun gear (SR3A, SR3B) is provided in the case of the third planetary gear set (RS3), wherein a first sun gear part (SR3A) is connectable via the second free-wheel clutch (F2) to the planet carrier (PT1) of the first planetary gear set (RS1), and wherein a second sun gear part (SR3B) is fixable via the second brake (B2), **in that** the ring gear (HR4) of the fourth planetary gear set (RS4) is fixable via the third brake (B3), **in that** the ring gear (HR4) of the fourth planetary gear set (RS4) is connectable via the third free-wheel clutch (F3) to the planet carrier (PT1) of the first planetary gear set (RS1), and **in that** a divided sun gear (SR4A, SR4B) of the fourth planetary gear set (RS4) is provided, wherein a first sun gear part (SR4A) is fixable via the fourth brake (B4), and wherein a second sun gear part (SR4B) is connectable via the third free-wheel clutch (F3) to the planet carrier (PT1) of the first planetary gear set (RS1). (Figure 4)

16. Multi-stage transmission according to one of the preceding claims, **characterized in that**, in order to shift a first gear (G1), the first brake (B1), the second brake (B2), the third brake (B3) and the fourth brake (B4) are disengaged, wherein the first free-wheel clutch (F1), the second free-wheel clutch (F2), the third free-wheel clutch (F3) and the fourth free-wheel clutch (F4) are in the locking direction state, and/or **in that**, in order to shift a second gear (G2), the first brake (B1), the second brake (B2) and the third brake (B3) are disengaged and the fourth brake (B4) is engaged, wherein the first free-wheel clutch (F1), the second free-wheel clutch (F2) and the third free-wheel clutch (F3) are in the locking direction state and the fourth free-wheel clutch (F4) is in the overrun driving state, and/or **in that**, in order to shift a third gear (G3), the first brake (B1), the second brake (B2) and the fourth brake (B4) are disengaged and the third brake (B3) is engaged, wherein the first free-wheel clutch (F1), the second free-wheel clutch (F2) and the fourth free-wheel clutch (F4) are in the locking direction state and the third free-wheel clutch (F3) is in the overrun driving state, and/or **in that**, in order to shift a fourth gear (G4), the first brake (B1) and the second brake (B2) are disengaged and the third brake (B3) and the fourth brake (B4) are engaged, wherein the first free-wheel clutch (F1) and the second free-wheel clutch (F2) are in the locking direction state and the third free-wheel clutch (F3) and the fourth free-wheel clutch (F4) are in the overrun driving state, and/or **in that**, in order to shift a fifth gear (G5), the first brake (B1), the third brake (B3) and the fourth brake (B4) are disengaged and the second brake (B2) is engaged, wherein the first free-wheel clutch (F1), the third free-wheel clutch (F3) and the fourth free-wheel clutch (F4) are in the locking direction state and the second free-wheel clutch (F2) is in the overrun driving state, and/or **in that**, in order to shift a sixth gear (G6), the first brake (B1) and the third brake (B3) are disengaged and the second brake (B2) and the fourth brake (B4) are engaged, wherein the first free-wheel clutch (F1) and the third free-wheel clutch (F3) are in the locking direction state and the second free-wheel clutch (F2) and the fourth free-wheel clutch (F4) are in the overrun driving state, and/or **in that**, in order to shift a seventh gear (G7), the first brake (B1) and the fourth brake (B4) are disengaged and the second brake (B2) and the third brake (B3) are engaged, wherein the first free-wheel clutch (F1) and fourth free-wheel clutch (F4) are in the locking direction state and the second free-wheel clutch (F2) and the third free-wheel clutch (F3) are in the overrun driving state, and/or **in that**, in order to shift an eighth gear (G8), the first brake (B1) is disengaged and the second brake (B2), the third brake (B3) and the fourth brake (B4) are engaged, wherein the first free-wheel clutch (F1) is in the locking direction state and the second free-wheel clutch (F2), the third free-wheel clutch (F3) and the fourth free-wheel clutch (F4) are in the overrun driving state, and/or **in that**, in order to shift a ninth gear (G9), the first brake (B1) is engaged and the second brake (B2), the third brake (B3) and the fourth brake (B4) are disengaged, wherein the first free-wheel clutch (F1) is in the overrun driving state and the second free-wheel clutch (F2), the third free-wheel clutch (F3) and the fourth free-wheel clutch (F4) are in the locking direction state, and/or **in that**, in order to shift a tenth gear (G10), the first brake (B1) and the fourth brake (B4) are engaged and the second brake (B2) and the third brake (B3) are disengaged, wherein the first free-wheel clutch (F1) and the fourth free-wheel clutch (F4) are in the overrun driving state and the second free-wheel clutch (F2) and the third free-wheel clutch (F3) are in the locking direction state, and/or **in that**, in order to shift an eleventh gear (G11), the first brake (B1) and the third brake (B3) are engaged and the second brake (B2) and the fourth brake (B4) are disengaged, wherein the first free-wheel clutch (F1) and the third free-wheel clutch (F3) are in the overrun driving state and the second free-wheel clutch (F2) and the fourth free-wheel clutch (F4) are in the locking direction state, and/or **in that**, in order to shift a twelfth gear (G12), the first brake (B1), the third brake (B3) and the fourth brake (B4) are engaged and the second brake (B2) is disengaged, wherein the first free-wheel clutch (F1), the third free-wheel clutch (F3) and the fourth free-wheel clutch (F4) are in the overrun driving state and the second free-wheel clutch (F2) is in the locking direction state, and/or **in that**, in order to shift a thirteenth gear (G13), the first brake (B1) and the second brake (B2) are engaged and the third brake (B3) and fourth brake (B4) are disengaged, wherein the first free-wheel clutch (F1) and the second free-wheel clutch (F2) are in the overrun driving state and the third free-wheel clutch (F3) and the fourth free-wheel clutch (F4) are in the locking direction state, and/or **in that**, in order to shift a fourteenth gear (G14), the first brake (B1), the second brake (B2) and the fourth brake (B4) are engaged and the third brake (B3) is disengaged, wherein the first free-wheel clutch (F1), the second free-wheel clutch (F2) and the fourth free-wheel clutch (F4) are in the overrun driving state and the third free-wheel clutch (F3) is in the locking direction state, and/or **in that**, in order to shift a fifteenth gear (G15), the first brake (B1), the second brake (B2) and the third brake (B3) are engaged and the fourth brake (B4) is disengaged, wherein the first free-wheel clutch (F1), the second free-wheel clutch (F2) and the third free-wheel clutch (F3) are in the overrun driving state and the fourth free-wheel clutch (F4) is in the locking direction state, and/or **in that**, in order to shift a sixteenth gear (G16), the first brake (B1), the second brake (B2), the third brake (B3) and the fourth brake (B4) are engaged, wherein the first free-wheel clutch (F1), the second free-wheel clutch (F2), the third free-wheel clutch (F3) and the fourth free-wheel clutch (F4) are in the overrun driving state.

17. Multi-stage transmission according to one of the preceding claims, **characterized in that** the multi-stage transmission is designed as a bottom bracket transmission with planetary gear sets (RS1, RS2, RS3, RS4) arranged coaxially with respect to one another, wherein the transmission input shaft (1) is designed as a central bottom bracket crankshaft.

18. Multi-stage transmission according to one of the preceding claims, **characterized in that** at least one electric machine is provided.

19. Bicycle or pedelec having a multi-stage transmission according to one of the preceding claims.

## Revendications

1. Boîte de vitesses à plusieurs étages de type planétaire pour un vélo ou un vélo à assistance électrique, comprenant un arbre d'entrée de boîte de vitesses (1) en tant qu'entrée et un arbre de sortie de boîte de vitesses (2) en tant que sortie, comprenant un premier train planétaire (RS1), un deuxième train planétaire (RS2), un troisième train planétaire (RS3) et un quatrième train planétaire (RS4), au moins quatre embrayages à roue libre (F1, F2, F3, F4) et au moins quatre freins (B1, B2, B3, B4) étant prévus pour réaliser au moins 16 rapports (G1, G2, G3, G4, G5, G6, G7, G8, G9, G10, G11, G12, G13, G14, G15, G16), un élément d'entrée du premier train planétaire (RS1) étant relié à l'arbre d'entrée de boîte de vitesses (1), un élément de sortie du premier train planétaire (RS1) étant relié à l'arbre de sortie de boîte de vitesse (2), un élément de couplage du premier train planétaire (RS1) étant relié à un deuxième élément du deuxième train planétaire (RS2), un premier élément du deuxième train planétaire (RS2) étant relié à un deuxième élément du troisième train planétaire (RS3), un troisième élément du deuxième train planétaire (RS2) étant relié à un deuxième élément du quatrième train planétaire (RS4), un premier élément du troisième train planétaire (RS3) pouvant être bloqué avec un premier frein (B1), **caractérisée en ce que** le premier élément du troisième train planétaire (RS3) peut être relié par l'intermédiaire d'un premier embrayage à roue libre (F1) à l'élément d'entrée du premier train planétaire (RS1), un troisième élément du troisième train planétaire (RS3) pouvant être bloqué par l'intermédiaire d'un deuxième frein (B2), le troisième élément du troisième train planétaire (RS3) pouvant être relié par l'intermédiaire d'un deuxième embrayage à roue libre (F2) à l'élément d'entrée du premier train planétaire (RS1), un premier élément du quatrième train planétaire (RS4) pouvant être bloqué par l'intermédiaire d'un troisième frein (B3), le premier élément du quatrième train planétaire (RS4) pouvant être relié par l'intermédiaire d'un troisième embrayage à roue libre (F3) à l'élément d'entrée du premier train planétaire (RS1), un troisième élément du quatrième train planétaire (RS4) pouvant être bloqué par l'intermédiaire d'un quatrième frein (B4) et le troisième élément du quatrième train planétaire (RS4) pouvant être relié par l'intermédiaire d'un quatrième embrayage à roue libre (F4) à l'élément d'entrée du premier train planétaire (RS1).

2. Boîte de vitesses à plusieurs étages selon la revendication 1, **caractérisée en ce que** l'élément d'entrée du premier train planétaire (RS1) est réalisé en tant que deuxième élément du premier train planétaire (RS1), **en ce que** l'élément de sortie du premier train planétaire (RS1) est réalisé en tant que premier élément ou en tant que troisième élément du premier train planétaire (RS1) et **en ce que** l'élément de couplage du premier train planétaire (RS1) est réalisé en tant que troisième élément ou en tant que premier élément.

3. Boîte de vitesses à plusieurs étages selon la revendication 1 ou 2, **caractérisée en ce que** le premier train planétaire (RS1) et/ou le deuxième train planétaire (RS2) et/ou le troisième train planétaire (RS3) et/ou le quatrième train planétaire (RS4) sont réalisés en tant que train planétaire négatif.

4. Boîte de vitesses à plusieurs étages selon la revendication 3, **caractérisée en ce que**, dans le cas d'un train planétaire négatif, le premier élément est réalisé en tant que couronne (HR1, HR2, HR3, HR3A, HR3B, HR4, HR4A, HR4B), le deuxième élément est réalisé en tant que porte-satellites (PT1, PT2, PT3, PT4) et le troisième élément est réalisé en tant que roue solaire (SR1, SR2, SR3, SR3A, SR3B, SR4, SR4A, SR4B).

5. Boîte de vitesses à plusieurs étages selon l'une quelconque des revendications précédentes, **caractérisée en ce que** le premier train planétaire (RS1) et/ou le deuxième train planétaire (RS2) et/ou le troisième train planétaire (RS3) et/ou le quatrième train planétaire (RS4) sont chacun réalisés en tant que train planétaire positif.

6. Boîte de vitesses à plusieurs étages selon la revendication 5, **caractérisée en ce que**, dans le cas d'un train planétaire positif, le premier élément est réalisé en tant que porte-satellites (PT1, PT2, PT3, PT4), le deuxième élément est réalisé en tant que couronne (HR1, HR2, HR3, HR3A, HR3B, HR4, HR4A, HR4B) et le troisième élément est réalisé en tant que roue solaire (SR1, SR2, SR3, SR3A, SR3B, SR4, SR4A, SR4B).

7. Boîte de vitesses à plusieurs étages selon l'une quelconque des revendications précédentes, **caractérisée en ce qu'**au moins le premier train planétaire (RS1) et/ou le deuxième train planétaire (RS2) présentent chacun un satellite étagé.

8. Boîte de vitesses à plusieurs étages selon l'une quelconque des revendications précédentes, **caractérisée en ce qu'**au moins pour le troisième train planétaire (RS3) et/ou le quatrième train planétaire (RS4), une roue solaire divisée (SR3A, SR3B, SR4A, SR4B) avec une première partie de roue solaire (SR3A, SR4A) et une deuxième partie de roue solaire (SR3B, SR4B) est prévue, la première partie de roue solaire (SR3A, SR4A) et la deuxième partie de roue solaire (SR3B, SR4B) étant reliées fonctionnellement entre elles.

9. Boîte de vitesses à plusieurs étages selon l'une quelconque des revendications précédentes, **caractérisée en ce qu'**au moins pour le troisième train planétaire (RS3) et/ou le quatrième train planétaire (RS4), une couronne divisée (HR3A, HR3B, HR4A, HR4B) avec une première partie de couronne (HR3A, HR4A) et une deuxième partie de couronne (HR3B, HR4B) est prévue, la première partie de couronne (HR3A, HR4A) et la deuxième partie de couronne (HR3B, HR4B) étant reliées fonctionnellement entre elles.

10. Boîte de vitesses à plusieurs étages selon l'une quelconque des revendications précédentes, **caractérisée en ce que** l'ordre axial des trains individuels est choisi de telle sorte que le quatrième train planétaire (RS4) est agencé en tant que premier train individuel, le deuxième train planétaire (RS2) est agencé en tant que deuxième train individuel, le troisième train planétaire (RS3) est agencé en tant que troisième train individuel et le premier train planétaire (RS1) est agencé en tant que quatrième train individuel.

11. Boîte de vitesses à plusieurs étages selon l'une quelconque des revendications 1 à 10, **caractérisée en ce que** l'ordre axial des trains individuels est choisi de telle sorte que le premier train planétaire (RS1) est agencé en tant que premier train individuel, le troisième train planétaire (RS3) est agencé en tant que deuxième train individuel, le deuxième train planétaire (RS2) est agencé en tant que troisième train individuel et le quatrième train planétaire (RS4) est agencé en tant que quatrième train individuel.

12. Boîte de vitesses à plusieurs étages selon l'une quelconque des revendications précédentes, **caractérisée en ce que** l'arbre d'entrée de boîte de vitesses (1) est relié à un porte-satellites (PT1) du premier train planétaire (RS1) en tant qu'élément d'entrée, **en ce qu'**une couronne (HR1) du premier train planétaire (RS1) est reliée en tant qu'élément de sortie à l'arbre de sortie de boîte de vitesses (2), **en ce qu'**une roue solaire (SR1) du premier train planétaire (RS1) est reliée en tant qu'élément de couplage à un porte-satellites (PT2) du deuxième train planétaire (RS2), **en ce qu'**une couronne (HR2) du deuxième train planétaire (RS2) est reliée à un porte-satellites (PT3) du troisième train planétaire (RS3), **en ce qu'**une roue solaire (SR2) du deuxième train planétaire (RS2) est reliée à un porte-satellites (PT4) du quatrième train planétaire (RS4), **en ce qu'**une roue solaire (SR3) du troisième train planétaire (RS3) peut être bloquée par l'intermédiaire d'un deuxième frein (B2), **en ce que** la roue solaire (SR3) du troisième train planétaire (RS3) peut être reliée par l'intermédiaire d'un deuxième embrayage à roue libre (F2) au porte-satellites (PT1) du premier train planétaire (RS1), **en ce qu'**une couronne divisée (HR3A, HR3B) est prévue pour le troisième train planétaire (RS3), une première partie de couronne (HR3A) pouvant être reliée par l'intermédiaire d'un premier embrayage à roue libre (F1) au porte-satellites (PT1) du premier train planétaire (RS1) et une deuxième partie de couronne (HR3B) pouvant être bloquée par l'intermédiaire d'un premier frein (B1), **en ce qu'**une roue solaire (SR4) du quatrième train planétaire (RS4) peut être bloquée par l'intermédiaire d'un quatrième frein (B4), **en ce que** la roue solaire (SR4) du quatrième train planétaire (RS4) peut être reliée par l'intermédiaire d'un quatrième embrayage à roue libre (F4) au porte-satellites (PT1) du premier train planétaire (RS1), et **en ce qu'**une couronne divisée (HR4A, HR4B) est prévue pour le quatrième train planétaire (RS4), une première partie de couronne (HR4A) pouvant être bloquée par l'intermédiaire d'un troisième frein (B3) et une deuxième partie de couronne (HR4B) pouvant être reliée par l'intermédiaire d'un troisième embrayage à roue libre (F3) au porte-satellites (PT1) du premier train planétaire (RS1). (Figure 1)

13. Boîte de vitesses à plusieurs étages selon l'une quelconque des revendications 1 à 11, **caractérisée en ce que** le premier train planétaire (RS1) est réalisé avec un satellite étagé, **en ce que** l'arbre d'entrée de boîte de vitesses (1) est relié au porte-satellites (PT1) du premier train planétaire (RS1) en tant qu'élément d'entrée, **en ce que** la couronne (HR1) du premier train planétaire (RS1) en prise avec le satellite étagé est reliée en tant qu'élément de sortie à l'arbre de sortie de boîte de vitesses (2), **en ce que** la roue solaire (SR1) du premier train planétaire (RS1) en prise avec le satellite étagé est reliée en tant qu'élément de couplage au porte-satellites (PT2) du deuxième train planétaire (RS2), **en ce que** le deuxième train planétaire (RS2) est réalisé avec un satellite étagé, **en ce que** la roue solaire (SR2) du deuxième train planétaire (RS2) en prise avec le satellite étagé est reliée au porte-satellites (PT4) du quatrième train planétaire (RS4), **en ce que** la couronne (HR2) du deuxième train planétaire (RS2) en prise avec le satellite étagé est reliée au porte-satellites (PT3) du troisième train planétaire (RS3), **en ce que** la couronne (HR3) du troisième train planétaire (RS3) peut être bloquée par l'intermédiaire du premier frein (B1), **en ce que** la couronne (HR3) du troisième train planétaire (RS3) peut être reliée par l'intermédiaire du premier embrayage à roue libre (F1) au porte-satellites (PT1) du premier train planétaire (RS1), **en ce qu'**une roue solaire divisée (SR3A, SR3B) est prévue pour le troisième train planétaire (RS3), une première partie de roue solaire (SR3A) pouvant être bloquée par l'intermédiaire du deuxième frein (B2) et une deuxième partie de roue solaire (SR3B) pouvant être reliée par l'intermédiaire du deuxième embrayage à roue libre (F2) au porte-satellites (PT1) du premier train planétaire (RS1), **en ce que** la couronne (HR4) du quatrième train planétaire (RS4) peut être bloquée par l'intermédiaire du troisième frein (B3), **en ce que** la couronne (HR4) du quatrième train planétaire (RS4) peut être reliée par l'intermédiaire du troisième embrayage à roue libre (F3) au porte-satellites (PT1) du premier train planétaire (RS1) et **en ce qu'**une roue solaire divisée (SR4A, SR4B) est prévue pour le quatrième train planétaire (RS4), une première partie de roue solaire (SR4A) pouvant être reliée par l'intermédiaire d'un quatrième embrayage à roue libre (F4) au porte-satellites (PT1) du premier train planétaire (RS1) et une deuxième partie de roue solaire (SR4B) pouvant être bloquée par l'intermédiaire du quatrième frein (B4). (Figure 2)

14. Boîte de vitesses à plusieurs étages selon l'une quelconque des revendications 1 à 11, **caractérisée en ce que** le premier train planétaire (RS1) est réalisé avec un satellite étagé, **en ce que** l'arbre d'entrée de boîte de vitesses (1) est relié au porte-satellites (PT1) du premier train planétaire (RS1) en tant qu'élément d'entrée, **en ce que** la couronne (HR1) du premier train planétaire (RS1) en prise avec le satellite étagé est reliée en tant qu'élément de sortie à l'arbre de sortie de boîte de vitesses (2), **en ce que** la roue solaire (SR1) du premier train planétaire (RS1) en prise avec le satellite étagé est reliée en tant qu'élément de couplage au porte-satellites (PT2) du deuxième train planétaire (RS2), **en ce que** le deuxième train planétaire (RS2) est réalisé avec un satellite étagé, **en ce que** la roue solaire (SR2) du deuxième train planétaire (RS2) en prise avec le satellite étagé est reliée au porte-satellites (PT4) du quatrième train planétaire (RS4), **en ce que** la couronne (HR2) du deuxième train planétaire (RS2) en prise avec le satellite étagé est reliée au porte-satellites (PT3) du troisième train planétaire (RS3), **en ce que** la couronne (HR3) du troisième train planétaire (RS3) peut être bloquée par l'intermédiaire du premier frein (B1), **en ce que** la couronne (HR3) du troisième train planétaire (RS3) peut être reliée par l'intermédiaire du premier embrayage à roue libre (F1) au porte-satellites (PT1) du premier train planétaire (RS1), **en ce qu'**une roue solaire divisée (SR3A, SR3B) est prévue pour le troisième train planétaire (RS3), une première partie de roue solaire (SR3A) pouvant être reliée par l'intermédiaire du deuxième embrayage à roue libre (F2) au porte-satellites (PT1) du premier train planétaire (RS1) et une deuxième partie de roue solaire (SR3B) pouvant être bloquée par l'intermédiaire du deuxième frein (B2), **en ce que** la couronne (HR4) du quatrième train planétaire (RS4) peut être bloquée par l'intermédiaire du troisième frein (B3), **en ce que** la couronne (HR4) du quatrième train planétaire (RS4) peut être reliée par l'intermédiaire du troisième embrayage à roue libre (F3) au porte-satellites (PT1) du premier train planétaire (RS1) et **en ce qu'**une roue solaire divisée (SR4A, SR4B) est prévue pour le quatrième train planétaire (RS4), une première partie de roue solaire (SR4A) pouvant être bloquée par l'intermédiaire du quatrième frein (B4) et une deuxième partie de roue solaire (SR4B) pouvant être reliée par l'intermédiaire du quatrième embrayage à roue libre (F4) au porte-satellites (PT1) du premier train planétaire (RS1). (Figure 3)

15. Boîte de vitesses à plusieurs étages selon l'une quelconque des revendications 1 à 11, **caractérisée en ce que** le premier train planétaire (RS1) est réalisé avec un satellite étagé, **en ce que** l'arbre d'entrée de boîte de vitesses (1) est relié au porte-satellites (PT1) du premier train planétaire (RS1) en tant qu'élément d'entrée, **en ce que** la roue solaire (SR1) du premier train planétaire (RS1) en prise avec le satellite étagé est reliée en tant qu'élément de sortie à l'arbre de sortie de boîte de vitesses (2), **en ce que** la couronne (HR1) du premier train planétaire (RS1) en prise avec le satellite étagé est reliée en tant qu'élément de couplage au porte-satellites (PT2) du deuxième train planétaire (RS2), **en ce que** le deuxième train planétaire (RS2) est réalisé avec un satellite étagé, **en ce que** la couronne (HR2) du deuxième train planétaire (RS2) en prise avec le satellite étagé est reliée au porte-satellites (PT3) du troisième train planétaire (RS3), **en ce que** la roue solaire (SR2) du deuxième train planétaire (RS2) en prise avec le satellite étagé est reliée au porte-satellites (PT4) du quatrième train planétaire (RS4), **en ce que** la couronne (HR3) du troisième train planétaire (RS3) peut être bloquée par l'intermédiaire du premier frein (B1), **en ce que** la couronne (HR3) du troisième train planétaire (RS3) peut être reliée par l'intermédiaire du premier embrayage à roue libre (F1) au porte-satellites (PT1) du premier train planétaire (RS1), **en ce qu'**une roue solaire divisée (SR3A, SR3B) est prévue pour le troisième train planétaire (RS3), une première partie de roue solaire (SR3A) pouvant être reliée par l'intermédiaire du deuxième embrayage à roue libre (F2) au porte-satellites (PT1) du premier train planétaire (RS1) et une deuxième partie de roue solaire (SR3B) pouvant être bloquée par l'intermédiaire du deuxième frein (B2), **en ce que** la couronne (HR4) du quatrième train planétaire (RS4) peut être bloquée par l'intermédiaire du troisième frein (B3), **en ce que** la couronne (HR4) du quatrième train planétaire (RS4) peut être reliée par l'intermédiaire du troisième embrayage à roue libre (F3) au porte-satellites (PT1) du premier train planétaire (RS1), et **en ce qu'**une roue solaire divisée (SR4A, SR4B) du quatrième train planétaire (RS4) est prévue, une première partie de roue solaire (SR4A) pouvant être bloquée par l'intermédiaire du quatrième frein (B4) et une deuxième partie de roue solaire (SR4B) pouvant être reliée par l'intermédiaire du troisième embrayage à roue libre (F3) au porte-satellites (PT1) du premier train planétaire (RS1). (Figure 4)

16. Boîte de vitesses à plusieurs étages selon l'une quelconque des revendications précédentes, **caractérisée en ce que**, pour passer un premier rapport (G1), le premier frein (B1), le deuxième frein (B2), le troisième frein (B3) et le quatrième frein (B4) sont ouverts, le premier embrayage à roue libre (F1), le deuxième embrayage à roue libre (F2), le troisième embrayage à roue libre (F3) et le quatrième embrayage à roue libre (F4) étant dans l'état de blocage, et/ou **en ce que**, pour passer un deuxième rapport (G2), le premier frein (B1), le deuxième frein (B2) et le troisième frein (B3) sont ouverts et le quatrième frein (B4) est fermé, le premier embrayage à roue libre (F1), le deuxième embrayage à roue libre (F2) et le troisième embrayage à roue libre (F3) étant dans l'état de blocage et le quatrième embrayage à roue libre (F4) étant dans l'état de survitesse, et/ou **en ce que**, pour passer un troisième rapport (G3), le premier frein (B1), le deuxième frein (B2) et le quatrième frein (B4) sont ouverts et le troisième frein (B3) est fermé, le premier embrayage à roue libre (F1), le deuxième embrayage à roue libre (F2) et le quatrième embrayage à roue libre (F4) étant dans l'état de blocage et le troisième embrayage à roue libre (F3) étant dans l'état de survitesse, et/ou **en ce que**, pour passer une quatrième vitesse (G4), le premier frein (B1) et le deuxième frein (B2) sont ouverts et le troisième frein (B3) et le quatrième frein (B4) sont fermés, le premier embrayage à roue libre (F1) et le deuxième embrayage à roue libre (F2) étant dans l'état de blocage et le troisième embrayage à roue libre (F3) et le quatrième embrayage à roue libre (F4) étant dans l'état de survitesse, et/ou **en ce que**, pour passer une cinquième vitesse (G5), le premier frein (B1), le troisième frein (B3) et le quatrième frein (B4) sont ouverts et le deuxième frein (B2) est fermé, le premier embrayage à roue libre (F1), le troisième embrayage à roue libre (F3) et le quatrième embrayage à roue libre (F4) étant dans l'état de blocage et le deuxième embrayage à roue libre (F2) étant dans l'état de survitesse, et/ou **en ce que**, pour passer un sixième rapport (G6), le premier frein (B1) et le troisième frein (B3) sont ouverts et le deuxième frein (B2) et le quatrième frein (B4) sont fermés, le premier embrayage à roue libre (F1) et le troisième embrayage à roue libre (F3) étant dans l'état de blocage et le deuxième embrayage à roue libre (F2) et le quatrième embrayage à roue libre (F4) étant dans l'état de survitesse, et/ou **en ce que**, pour passer un septième rapport (G7), le premier frein (B1) et le quatrième frein (B4) sont ouverts et le deuxième frein (B2) et le troisième frein (B3) sont fermés, le premier embrayage à roue libre (F1) et le quatrième embrayage à roue libre (F4) étant dans l'état de blocage et le deuxième embrayage à roue libre (F2) et le troisième embrayage à roue libre (F3) étant dans l'état de survitesse, et/ou **en ce que**, pour passer un huitième rapport (G8), le premier frein (B1) est ouvert et le deuxième frein (B2), le troisième frein (B3) et le quatrième frein (B4) sont fermés, le premier embrayage à roue libre (F1) étant dans l'état de blocage et le deuxième embrayage à roue libre (F2), le troisième embrayage à roue libre (F3) et le quatrième embrayage à roue libre (F4) étant dans l'état de survitesse, et/ou **en ce que**, pour passer un neuvième rapport (G9), le premier frein (B1) est fermé et le deuxième frein (B2), le troisième frein (B3) et le quatrième frein (B4) sont ouverts, le premier embrayage à roue libre (F1) étant dans l'état de survitesse et le deuxième embrayage à roue libre (F2), le troisième embrayage à roue libre (F3) et le quatrième embrayage à roue libre (F4) étant dans l'état de blocage, et/ou **en ce que**, pour passer un dixième rapport (G10), le premier frein (B1) et le quatrième frein (B4) sont fermés et le deuxième frein (B2) et le troisième frein (B3) sont ouverts, le premier embrayage à roue libre (F1) et le quatrième embrayage à roue libre (F4) étant dans l'état de survitesse et le deuxième embrayage à roue libre (F2) et le troisième embrayage à roue libre (F3) étant dans l'état de blocage, et/ou **en ce que**, pour passer un onzième rapport (G11), le premier frein (B1) et le troisième frein (B3) sont fermés et le deuxième frein (B2) et le quatrième frein (B4) sont ouverts, le premier embrayage à roue libre (F1) et le troisième embrayage à roue libre (F3) étant dans l'état de survitesse et le deuxième embrayage à roue libre (F2) et le quatrième embrayage à roue libre (F4) étant dans l'état de blocage, et/ou **en ce que**, pour passer un douzième rapport (G12), le premier frein (B1), le troisième frein (B3) et le quatrième frein (B4) sont fermés et le deuxième frein (B2) est ouvert, le premier embrayage à roue libre (F1), le troisième embrayage à roue libre (F3) et le quatrième embrayage à roue libre (F4) étant dans l'état de survitesse et le deuxième embrayage à roue libre (F2) étant dans l'état de blocage, et/ou **en ce que**, pour passer un treizième rapport (G13), le premier frein (B1) et le deuxième frein (B2) sont fermés et le troisième frein (B3) et le quatrième frein (B4) sont ouverts, le premier embrayage à roue libre (F1) et le deuxième embrayage à roue libre (F2) étant dans l'état de survitesse et le troisième embrayage à roue libre (F3) et le quatrième embrayage à roue libre (F4) étant dans l'état de blocage, et/ou **en ce que**, pour passer un quatorzième rapport (G14), le premier frein (B1), le deuxième frein (B2) et le quatrième frein (B4) sont fermés et le troisième frein (B3) est ouvert, le premier embrayage à roue libre (F1), le deuxième embrayage à roue libre (F2) et le quatrième embrayage à roue libre (F4) étant dans l'état de survitesse et le troisième embrayage à roue libre (F3) étant dans l'état de blocage, et/ou **en ce que**, pour passer un quinzième rapport (G15), le premier frein (B1), le deuxième frein (B2) et le troisième frein (B3) sont fermés et le quatrième frein (B4) est ouvert, le premier embrayage à roue libre (F1), le deuxième embrayage à roue libre (F2) et le troisième embrayage à roue libre (F3) étant dans l'état de survitesse et le quatrième embrayage à roue libre (F4) étant dans l'état de blocage, et/ou **en ce que**, pour passer un seizième rapport (G16), le premier frein (B1), le deuxième frein (B2), le troisième frein (B3) et le quatrième frein (B4) sont fermés, le premier embrayage à roue libre (F1), le deuxième embrayage à roue libre (F2), le troisième embrayage à roue libre (F3) et le quatrième embrayage à roue libre (F4) étant dans l'état de survitesse.

17. Boîte de vitesses à plusieurs étages selon l'une quelconque des revendications précédentes, **caractérisée en ce que** la boîte de vitesses à plusieurs étages est réalisée en tant que boîte de vitesses de pédalier comprenant des trains planétaires (RS1, RS2, RS3, RS4) agencés coaxialement les uns par rapport aux autres, l'arbre d'entrée de boîte de vitesse (1) étant réalisé en tant que vilebrequin de pédalier central.

18. Boîte de vitesses à plusieurs étages selon l'une quelconque des revendications précédentes, **caractérisée en ce qu'**au moins une machine électrique est prévue.

19. Vélo ou vélo à assistance électrique comprenant une boîte de vitesses à plusieurs étages selon l'une quelconque des revendications précédentes.
